(19) Europäisches Patentamt
European Patent Office
Office européen des brevets

(11) **EP 2 472 871 A1**

(12) **EUROPEAN PATENT APPLICATION**
published in accordance with Art. 153(4) EPC

(43) Date of publication:
**04.07.2012 Bulletin 2012/27**

(51) Int Cl.:
***H04N 7/32*** *(2006.01)*  ***G06T 7/20*** *(2006.01)*

(21) Application number: **10811735.9**

(22) Date of filing: **18.08.2010**

(86) International application number:
**PCT/JP2010/063919**

(87) International publication number:
**WO 2011/024685 (03.03.2011 Gazette 2011/09)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **28.08.2009 JP 2009198767**

(71) Applicant: **Sony Corporation Tokyo 108-0075 (JP)**

(72) Inventor: **SATO Kazushi Tokyo 108-0075 (JP)**

(74) Representative: **Körber, Martin Hans Mitscherlich & Partner Sonnenstraße 33 80331 München (DE)**

(54) **IMAGE PROCESSING DEVICE AND METHOD**

(57)     The present invention relates to an image processing device and method, which can handle local nature within a frame.

A block determining unit 77 outputs a control signal to one of a large block filter calculating unit 92 and small block filter calculating unit 93, thereby classifying blocks into a class of block sizes greater than $8 \times 8$ and a class of block sizes $8 \times 8$ or smaller. At the large block filter calculating unit 92 or small block filter calculating unit 93, only motion vector information of classes into which classification has been performed is used for calculating filter coefficients for that class. The present invention can be applied to an image encoding device which performed encoding based on the H.264/AVC format, for example.

FIG. 7

**Description**

Technical Field

The present invention relates to an image processing device and method, and more particularly relates to an image processing device and method which further improve encoding efficiency by calculating optimal filter coefficients corresponding to local nature within a frame.

Background Art

In recent years, devices have come into widespread use which subject an image to compression encoding by employing an encoding format handling image information as digital, and at this time compress the image by orthogonal transform such as discrete cosine transform or the like and motion compensation, taking advantage of redundancy which is a feature of the image information, in order to perform highly efficient transmission and storage of information. Examples of this encoding format include MPEG (Moving Picture Expert Group) and so forth.

In particular, MPEG2 (ISO/IEC 13818-2) is defined as a general-purpose image encoding format, and is a standard encompassing both of interlaced scanning images and sequential-scanning images, and standard resolution images and high definition images. For example, MPEG2 has widely been employed now by broad range of applications for professional usage and for consumer usage. By employing the MPEG2 compression format, a code amount (bit rate) of 4 through 8 Mbps is allocated in the event of an interlaced scanning image of standard resolution having $720 \times 480$ pixels, for example. By employing the MPEG2 compression format, a code amount (bit rate) of 18 through 22 Mbps is allocated in the event of an interlaced scanning image of high resolution having $1920 \times 1088$ pixels, for example. Thus, a high compression rate and excellent image quality can be realized.

MPEG2 has principally been aimed at high image quality encoding adapted to broadcasting usage, but does not handle lower code amount (bit rate) than the code amount of MPEG1, i.e., an encoding format having a higher compression rate. It is expected that demand for such an encoding format will increase from now on due to the spread of personal digital assistants, and in response to this, standardization of the MPEG4 encoding format has been performed. With regard to an image encoding format, the specification thereof was confirmed as international standard as ISO/IEC 14496-2 in December in 1998.

Further, in recent years, standardization of a standard called H.26L (ITU-T Q6/16 VCEG) has progressed, the object of which was initially image encoding for videoconferencing usage. With H.26L, it has been known that though greater computation amount is requested for encoding and decoding thereof as compared to a conventional encoding format such as MPEG2 or MPEG4, higher encoding efficiency is realized. Also, currently, as part of activity of MPEG4, standardization for taking advantage of a function that is not supported by H.26L with this H.26L taken as base to realize higher encoding efficiency has been performed as Joint Model of Enhanced-Compression Video Coding. As a schedule of standardization, H.264 and MPEG-4 Part 10 (Advanced Video Coding, hereafter referred to as H.264/AVC) become an international standard in March, 2003.

Further, as an extension thereof, standardization of FRExt (Fidelity Range Extension) including a coding tool necessary for business use such as RGB, 4:2:2, or 4:4:4, 8x8DCT and quantization matrix stipulated by MPEG-2 has been completed as of February 2005. Accordingly, H.264/AVC can be used as an encoding format capable of suitably expressing even film noise included in movies, and has come to be employed for wide ranging applications such as Blu-Ray Disc (registered trademark) and so forth.

However, nowadays, needs for further high-compression encoding have been increased, such as intending to compress an image having around $4000 \times 2000$ pixels, which is quadruple of a high-vision image, or alternatively, such as intending to distribute a high-vision image within an environment with limited transmission capacity like the Internet. Therefore, with VCEG (= Video Coding Expert Group) under the control of ITU-T mentioned above, studies relating to improvement of encoding efficiency have continuously been performed.

Now, with motion prediction compensation according to the H.264/AVC format, prediction efficiency is improved by performing prediction/compensation processing with quarter- pixel precision.

For example, with the MEPG2 format, half-pixel precision motion prediction/compensation processing is performed by linear interpolation processing. On the other hand, with the H.264/AVC format, quarter-pixel precision prediction/compensation processing using a 6-tap FIR (Finite Impulse Response Filter) filter as an interpolation filter is performed.

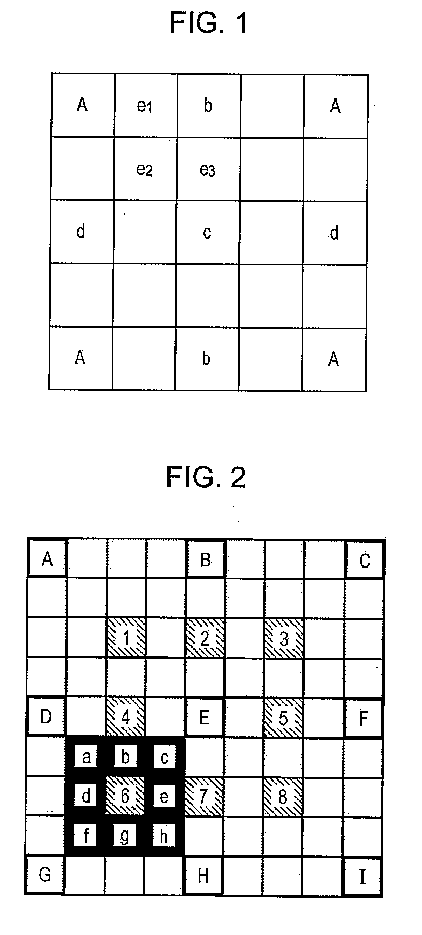

Fig. 1 is a diagram for describing prediction/compensation processing of quarter-pixel precision with the H. 264/AVC format. With the H.264/AVC format, quarter-pixel precision prediction/compensation processing is performed using 6-tap FIR (Finite Impulse Response Filter) filter.

In the example in Fig. 1, a position A indicates integer-precision pixel positions, positions b, c, and d indicate half-pixel precision positions, and positions e1, e2, and e3 indicate quarter-pixel precision positions. First, in the following Clip() is defined as in the following Expression (1).
[Mathematical Expression 1]

$$\mathrm{Clip1(a)} = \begin{cases} 0; \mathrm{if}\,(a < 0) \\ a; \mathrm{otherwise} \\ \mathrm{max\_pix}; \mathrm{if}\,(a > \mathrm{max\_pix}) \end{cases} \cdots (1)$$

Note that in the event that the input image is of 8-bit precision, the value of max_pix is 255.
The pixel values at positions b and d are generated as with the following Expression (2), using a 6-tap FIR filter.

[Mathematical Expression 2]

$$F = A_{-2} - 5 \cdot A_{-1} + 20 \cdot A_0 + 20 \cdot A_1 - 5 \cdot A_2 + A_3$$

$$b, d = \mathrm{Clip1}\,((F + 16) >> 5) \qquad \cdots (2)$$

The pixel value at the position c is generated as with the following Expression (3), using a 6-tap FIR filter in the horizontal direction and vertical direction.

[Mathematical Expression 3]

$$F = b_{-2} - 5 \cdot b_{-1} + 20 \cdot b_0 + 20 \cdot b_1 - 5 \cdot b_2 + b_3$$

or

$$F = d_{-2} - 5 \cdot d_{-1} + 20 \cdot d_0 + 20 \cdot d_1 - 5 \cdot d_2 + d_3$$

$$c = \mathrm{Clip1}((F + 512) >> 10) \qquad \ldots (3)$$

Note that Clip processing is performed just once at the end, following having performed product-sum processing in both the horizontal direction and vertical direction.
The positions e1 through e3 are generated by linear interpolation as with the following Expression (4).

[Mathematical Expression 4]

$$e_1 = (A + b + 1) >> 1$$

$$e_2 = (b + d + 1) >> 1$$

$$e_3 = (b + c + 1) >> 1 \qquad \ldots (4)$$

Also, what sort of processing with which to select motion vectors obtained in quarter-pixel precision as described above is important in obtaining compressed images with high encoding efficiency. One example of this processing is a method implemented in reference software (reference software), called JM (Joint Model), disclosed in NPL 1.

Next, a motion search method implemented in JM will be described with reference to Fig. 2.

In the example in Fig. 2, pixels A through I represent pixels having pixel values of integer pixel precision (hereinafter referred to as integer pixel precision pixels). Pixels 1 through 8 are pixels having pixel values of half-pixel precision around the pixel E (hereinafter referred to as half-pixel precision pixels). Pixels a through h are pixels having pixel values of quarter-pixel precision around the pixel 6 (hereinafter referred to as quarter-pixel precision pixels).

With JM, as a first step, an integer pixel precision motion vector which minimizes a cost function value such as the SAD (Sum of Absolute Difference) within a predetermined search range is obtained. Let us say that the pixel corresponding to the motion vector obtained in this way is the pixel E.

Next, as a second step, a pixel with a pixel value which minimizes the above-described cost function value is obtained from the pixel E and the pixels 1 through 8 of half-pixel precision surrounding the pixel E, and this pixel (the pixel 6 in the case of the example in Fig. 2) is taken as the pixel corresponding to the optimal motion vector of half-pixel precision.

Then, as a third step, a pixel with a pixel value which minimizes the above-described cost function value is obtained from the pixel 6 and the pixels a through h of quarter-pixel precision surrounding the pixel 6. Thus, the motion vector corresponding to the obtained pixel is the optimal motion vector of quarter-pixel precision.

As described above, quarter-pixel precision prediction/compensation processing is performed with the H.264/AVC format, and multiple techniques for further improving encoding efficiency have been proposed for this quarter-pixel precision prediction/compensation processing.

For example, with the H.264/AVC format, the filter coefficients for the interpolation filter to generate pixel values of sampling positions as to decimal pixel precision motion vectors described above with reference to Fig. 1 have been predetermined, as described in NPL 2.

Accordingly, proposed in NPL 3 is to adaptively switch the filter coefficients such that the prediction residual is the smallest for each current frame.

That is to say, with NPL 3, first, as a first step, normal H.264/AVC format motion prediction processing is performed, and motion vector values are calculated for each motion compensation block.

As a second step, filter optimization is performed such that the motion residual is minimal for the motion vector values obtained in the first step.

Then, as a third step, motion search is performed again using the filter coefficient obtained in the second step, and the motion vector value is updated. Thus, encoding efficiency can be improved.

Filter coefficients and motion vector values can be optimized by further repeating the above steps.

Also, as described above, the macroblock size is defined as $16 \times 16$ pixels with the H.264/AVC format. However, a macroblock size of $16 \times 16$ pixels is not optimal for a large image frame such as with UHD (Ultra High Definition; 4000 pixels $\times$ 2000 pixels) which is the object of next-generation encoding formats.

Accordingly, it is proposed in NPL 4 and so forth to extend the macroblock size to be a size of 32 pixels $\times$ 32 pixels, for example.

Note that the above-described Fig. 1 and Fig. 2 will also be used hereinafter to describe the present invention.

Citation List

Non Patent Literature

NPL 1: H.264/AVC Software Coordination, Institut Nachrichtentechnik Heinrich-Hertz-Institut, (searched August 13, 2009), Internet <URL: http://iphome.hhi.de/suehring/tml/index.htm>
NPL 2: "8.4.2.2.1 Luma sample interpolation process", "ITU-T Recommendation H.264 Advanced video coding for generic audiovisual", P162-P164 November 2007
NPL 3: "Prediction of P- and B- Frames Using a Two-dimensional Non-separable Adaptive Wiener Interpolation for H.264/AVC", VCEG-AD08, ITU-Telecommunications Standardization Sector STUDY GROUP Question 6 Video coding Experts Group(VCEG), 23-27 Oct 2006
NPL 4: "Video Coding Using Extended Block Sizes", VCEG-AD09, ITU-Telecommunications Standardization Sector STUDY GROUP Question 16 - Contribution 123, Jan 2009

Summary of Invention

Technical Problem

Now, with the method according to NPL 3 described above, the image quality of the overall frame is optimized and encoding efficiency improves, but the calculated adaptive filter coefficients are not necessarily optimal for local natures within the frame. For example, within a frame, the nature of signals differs between flat areas and texture areas including high-band components, so optimal filter coefficients must also be different.

However, with the method described in NPL 3, handling such local natures within the frame has been difficult.

The present invention has been made in light of this situation, and enables further improvement in encoding efficiency by calculating optimal filter coefficients corresponding to local nature within a frame. Solution to Problem

An image processing device according to a first aspect of the present invention includes: motion prediction means configured to perform motion prediction of a current block regarding which encoding processing is to be performed in candidate prediction modes, using a first filter coefficient that has been set beforehand; block determining means configured to classify into classes in accordance with block sizes indicated by an optimal prediction mode determined regarding the current block from the candidate prediction mode in which motion prediction has been performed by the motion prediction means; and filter coefficient calculating means configured to calculate a second filter coefficient which minimizes prediction error, for each of the classes classified by the block determining means.

The motion prediction means may perform motion prediction of the current block in the candidate prediction modes using the second filter coefficient calculated by the filter coefficient calculating means, with the image processing device further comprising: mode determining means configured to determine, from the candidate prediction modes in which motion prediction has been performed by the motion prediction means using the second filter coefficient, the optimal prediction mode regarding the current block; motion compensation means configured to perform motion compensation for the current block in the optimal prediction mode determined from the candidate prediction modes in which motion prediction has been performed by the motion prediction means; and encoding means configured to encoding difference between a prediction image of the current block obtained by the motion compensation by the motion compensation means, and an original image.

The encoding means may encode the second filter coefficient calculated for each of the classes by the filter coefficient calculating means.

The encoding means may encode flag information indicating sending of the second filter coefficient for each of the classes, and the second filter coefficient of a class regarding which the flag information has been encoded.

Regarding a prediction mode for a block size classified into a class where the flag information is not encoded, the motion prediction means may perform motion prediction of the current block using the first filter coefficient.

Regarding a prediction mode for a block size classified into a class where the flag information is not encoded, the motion prediction means may perform motion prediction of the current block using the second filter coefficient of a class of a block size greater than that of that class.

Regarding a prediction mode for a block size classified into a class where the flag information is not encoded in a current slice, the motion prediction means may perform motion prediction of the current block using the second filter coefficient of the same class in a slice prior to the current slice.

The block determining means may classify into the classes depending on whether or not the block size is greater than an $8 \times 8$ block.

The block determining means may classify into the classes depending on whether the block size is greater than a $16 \times 16$ block, or a $16 \times 16$ block or smaller but greater than an $8 \times 8$ block, or an $8 \times 8$ block or smaller.

An image processing method according to the first aspect of the present invention includes the steps of: an image processing device performing motion prediction of a current block regarding which encoding processing is to be performed in candidate prediction modes, using a first filter coefficient that has been set beforehand, classifying into classes in accordance with block sizes indicated by an optimal prediction mode determined regarding the current block from the candidate prediction mode in which motion prediction has been performed, and calculating a second filter coefficient which minimizes prediction error, for each of the classes classified.

An image processing device according to a second aspect of the present invention includes: decoding means configured to decode motion vector information of a current block regarding which decoding processing is to be performed; filter coefficient setting means configured to set, from filter coefficients calculated to minimize prediction error, for each of classes classified into classes in accordance with block sizes, a filter coefficient in accordance with the block size of the current block; and prediction image generating means configured to generate a prediction image of the current block, using the motion vector information decoded by the decoding means and the filter coefficient set by the filter coefficient setting means.

The decoding means may decode the filter coefficients for each class, encoded for each slice; with the filter coefficient setting means setting, from the filter coefficients for each class that have been decoded by the decoding means, a filter coefficient in accordance with the block size of the current block.

The decoding means may also decode prediction mode information of the current block; with the filter coefficient setting means setting a filter coefficient in accordance with the block size of the current block, in accordance with a block size indicated by the prediction mode information decoded by the decoding means.

The decoding means may decode flag information indicating sending of the filter coefficient of the each class encoded for each slice, and the filter coefficient of a class regarding which the flag information has been decoded.

For a current block of a block size classified into a class regarding which the flag information is not decoded, the prediction image generating means may generate a prediction image using a filter coefficient that has been set beforehand.

For a current block of a block size classified into a class regarding which the flag information is not encoded in a current slice, the prediction image generating means may perform motion prediction of said current block using said second filter coefficient of the same class in a slice prior to the current slice.

The block determining means may classify into the classes depending on whether or not the block size is greater than an $8 \times 8$ block.

The block determining means may classify into the classes depending on whether the block size is greater than a $16 \times 16$ block, or a $16 \times 16$ block or smaller but greater than an $8 \times 8$ block, or an $8 \times 8$ block or smaller.

Classifying into the classes may be performed depending on whether or not the block size is greater than an $8 \times 8$ block.

Classifying into the classes may be performed depending on whether the block size is greater than a $16 \times 16$ block, or a $16 \times 16$ block or smaller but greater than an $8 \times 8$ block, or an $8 \times 8$ block or smaller.

An image processing method according to the second aspect of the present invention includes the steps of: an image processing device decoding motion vector information of a current block regarding which decoding processing is to be performed, setting, from filter coefficients calculated to minimize prediction error, for each of classes classified into classes in accordance with block sizes, a filter coefficient in accordance with the block size of the current block, and generating a prediction image of the current block, using the motion vector information that has been decoded and the filter coefficient that has been set.

With the first aspect of the present invention, motion prediction is performed of a current block regarding which encoding processing is to be performed in candidate prediction modes, using a first filter coefficient that has been set beforehand, classifying into classes is performed in accordance with block sizes indicated by an optimal prediction mode determined regarding the current block from the candidate prediction mode in which motion prediction has been performed, and a second filter coefficient is calculated which minimizes prediction error, for each of the classes classified.

With the second aspect of the present invention, motion vector information of a current block regarding which decoding processing is to be performed is decoded, setting is performed of a filter coefficient in accordance with the block size of the current block, from filter coefficients calculated to minimize prediction error, for each of classes classified into classes in accordance with block sizes, and a prediction image of the current block is generated using the motion vector information that has been decoded and the filter coefficient that has been set.

Note that the above-described image processing devices may each be stand-alone devices, or may be internal blocks making up a single image encoding device or image decoding device.

Advantageous Effects of Invention

According to the first aspect of the present invention, optimal filter coefficients corresponding to local nature within a frame can be calculated. Also, according to the first aspect of the present invention, encoding efficiency can be improved.

According to the second aspect of the present invention, optimal filter coefficients corresponding to local nature within a frame can be set. Also, according to the second aspect of the present invention, encoding efficiency can be improved.

Brief Description of Drawings

[Fig. 1] Fig. 1 is a diagram describing quarter-pixel precision motion prediction/compensation processing according to the H.264/AVC format.

[Fig. 2] Fig. 2 is a diagram describing a motion search method according to the H.264/AVC format.

[Fig. 3] Fig. 3 is a block diagram illustrating a configuration of an embodiment of an image encoding device to which the present invention has been applied.

[Fig. 4] Fig. 4 is a diagram for describing motion prediction/compensation processing with variable block size.

[Fig. 5] Fig. 5 is a diagram for describing a motion prediction/compensation format of multi-reference frames.

[Fig. 6] Fig. 6 is a diagram for describing an example of a motion vector information generating method.

[Fig. 7] Fig. 7 is a block diagram illustrating a configuration example of the motion prediction/competition unit and adaptive interpolation filter calculating unit in Fig. 3.

[Fig. 8] Fig. 8 is a flowchart for describing the encoding processing of the image encoding device in Fig. 3.

[Fig. 9] Fig. 9 is a flowchart for describing prediction processing in step S21 in Fig. 8.

[Fig. 10] Fig. 10 is a flowchart for describing intra prediction processing in step S31 in Fig. 9.

[Fig. 11] Fig. 11 is a flowchart for describing inter motion prediction processing in step S32 in Fig. 9.

[Fig. 12] Fig. 12 is a flowchart for describing motion prediction/compensation processing in steps S51 or S52 in Fig. 11.

[Fig. 13] Fig. 13 is a block diagram illustrating the configuration of an embodiment of an image decoding device to which the present invention has been applied.

[Fig. 14] Fig. 14 is a block diagram illustrating a configuration example of the motion prediction/competition unit and adaptive interpolation filter setting unit in Fig. 13.

[Fig. 15] Fig. 15 is a flowchart for describing the decoding processing of the image decoding device in Fig. 13.

[Fig. 16] Fig. 16 is a flowchart for describing prediction processing in step S138 in Fig. 15.

[Fig. 17] Fig. 17 is a diagram illustrating an example of an extended block size.

[Fig. 18] Fig. 18 is a block diagram illustrating a configuration example of the hardware of a computer.

[Fig. 19] Fig. 19 is a block diagram illustrating a principal configuration example of a television receiver to which the present invention has been applied.

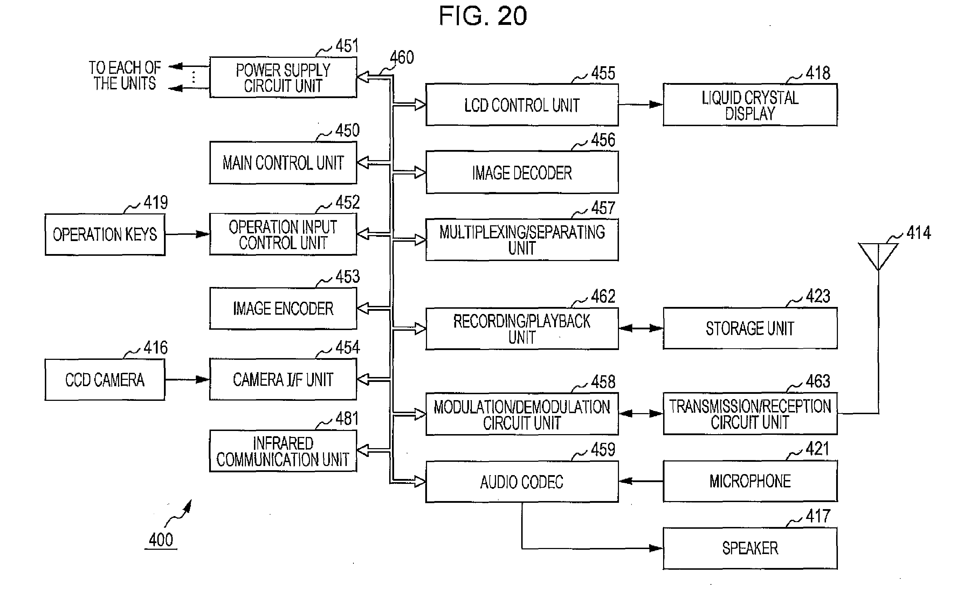

[Fig. 20] Fig. 20 is a block diagram illustrating a principal configuration example of a cellular phone to which the present invention has been applied.

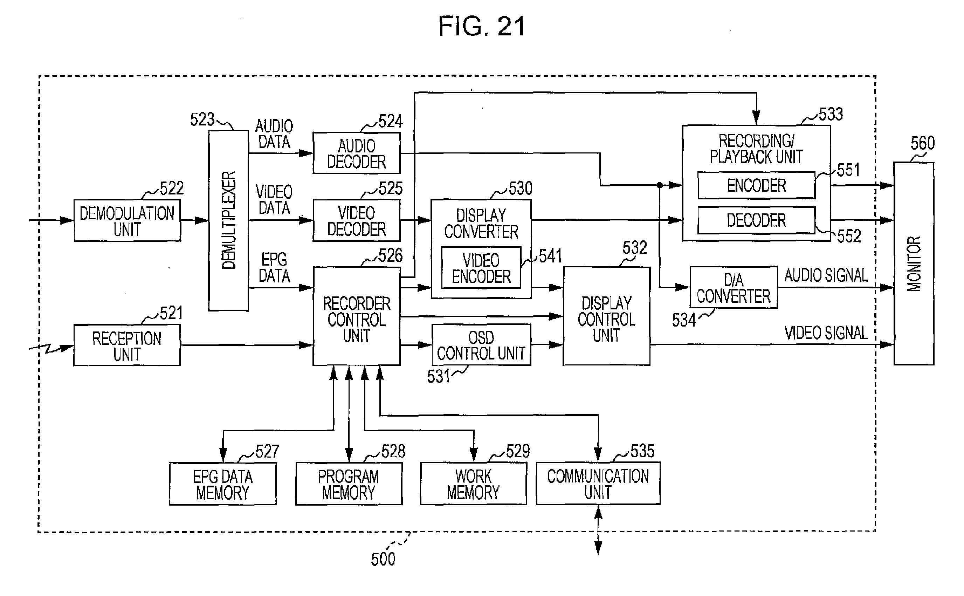

[Fig. 21] Fig. 21 is a block diagram illustrating a principal configuration example of a hard disk recorder to which the present invention has been applied.

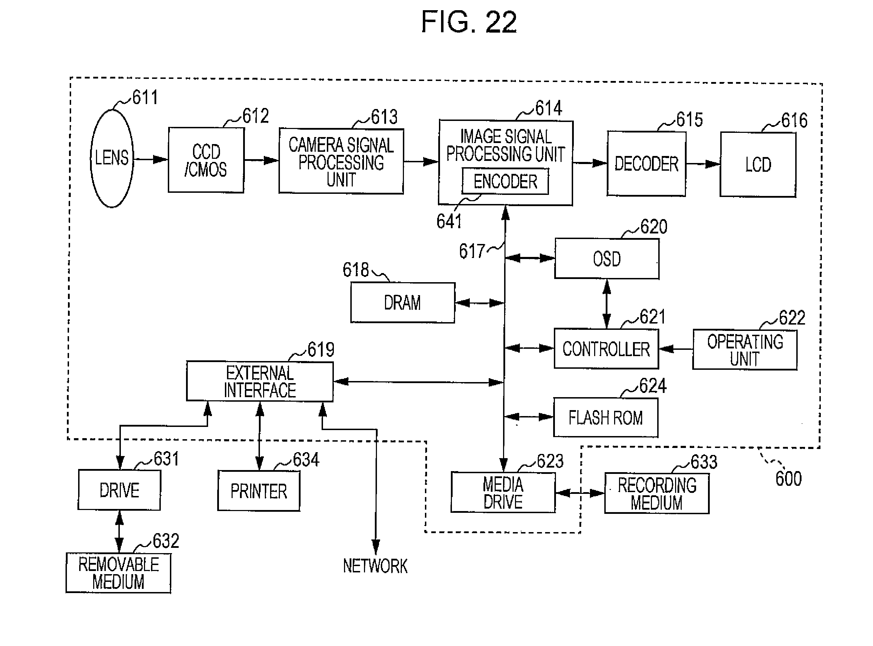

[Fig. 22] Fig. 22 is a block diagram illustrating a principal configuration example of a camera to which the present invention has been applied.

Description of Embodiments

Hereafter, an embodiment of the present invention will be described with reference to the drawings.

[Configuration Example of Image Encoding Device]

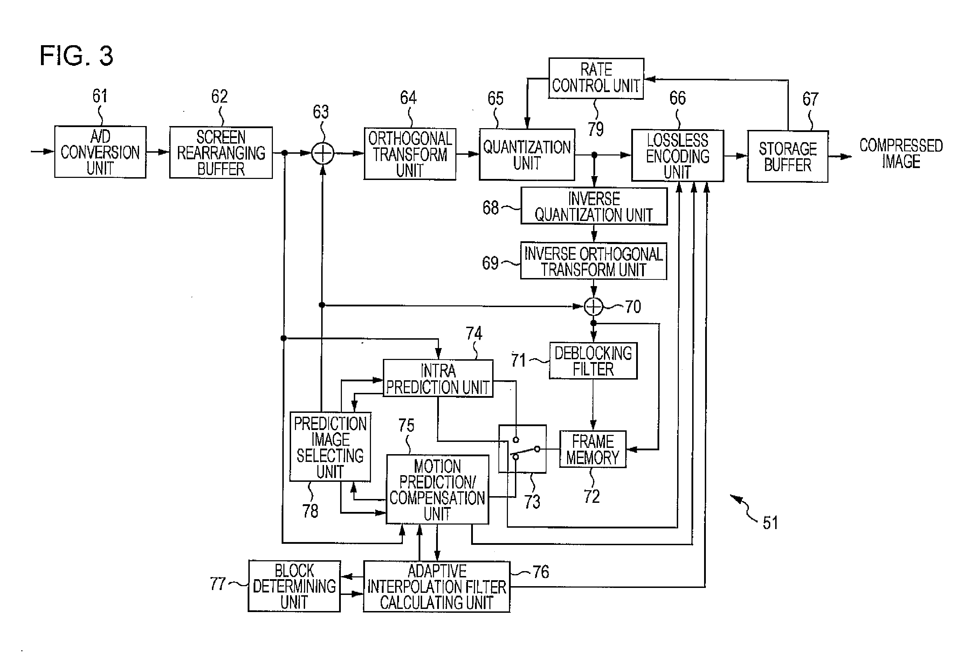

Fig. 3 represents the configuration of an embodiment of an image encoding device serving as an image processing device to which the present invention has been applied.

This image encoding device 51 subjects an image to compression encoding based on the H.264 and MPEG-4 Part 10 (Advanced Video Coding) (hereinafter written as H.264/AVC) format, for example.

With the example in Fig. 3, the image encoding device 51 is configured of an A/D conversion unit 61, a screen rearranging buffer 62, a computing unit 63, an orthogonal transform unit 64, a quantization unit 65, a lossless encoding unit 66, an storage buffer 67, an inverse quantization unit 68, an inverse orthogonal transform unit 69, a computing unit 70, a deblocking filter 71, frame memory 72, a switch 73, an intra prediction unit 74, a motion prediction/compensation unit 75, an adaptive interpolation filter calculating unit 76, a block determining unit 77, a prediction image selecting unit 78, and a rate control unit 79.

The A/D conversion unit 61 converts an input image from analog to digital, and outputs to the screen rearranging buffer 62 for storing. The screen rearranging buffer 62 rearranges the images of frames in the stored order for display into the order of frames for encoding according to GOP (Group of Picture).

The computing unit 63 subtracts from the image read out from the screen rearranging buffer 62 the prediction image from the intra prediction unit 74 selected by the prediction image selecting unit 78 or the prediction image from the motion prediction/compensation unit 75, and outputs difference information thereof to the orthogonal transform unit 64. The orthogonal transform unit 64 subjects the difference information from the computing unit 63 to orthogonal transform, such as discrete cosine transform, Karhunen-Loéve transform, or the like, and outputs a transform coefficient thereof. The quantization unit 65 quantizes the transform coefficient that the orthogonal transform unit 64 outputs.

The quantized transform coefficient that is the output of the quantization unit 65 is input to the lossless encoding unit 66, and subjected to lossless encoding, such as variable length coding, arithmetic coding, or the like, and compressed.

The lossless encoding unit 66 obtains information indicating intra prediction from the intra prediction unit 74, and obtains information indicating an inter prediction mode, and so forth from the motion prediction/compensation unit 75. Note that, hereafter, the information indicating intra prediction and the information indicating inter prediction will be referred to as intra prediction mode information and inter prediction mode information, respectively.

The lossless encoding unit 66 encodes the quantized transform coefficient, and also encodes the information indicating intra prediction, the information indicating an inter prediction mode, and so forth, and takes these as part of header information in the compressed image. The lossless encoding unit 66 supplies the encoded data to the storage buffer 67 for storage.

For example, with the lossless encoding unit 66, lossless encoding processing, such as variable length coding, arithmetic coding, or the like, is performed. Examples of the variable length coding include CAVLC (Context-Adaptive Variable Length Coding) determined by the H.264/AVC format. Examples of the arithmetic coding include CABAC (Context-Adaptive Binary Arithmetic Coding).

The storage buffer 67 outputs the data supplied from the lossless encoding unit 66 to, for example, a downstream storage device or transmission path or the like not shown in the drawing, as a compressed image encoded by the H. 264/AVC format.

Also, the quantized transform coefficient output from the quantization unit 65 is also input to the inverse quantization unit 68, subjected to inverse quantization, and then subjected to further inverse orthogonal transform at the inverse orthogonal transform unit 69. The output subjected to inverse orthogonal transform is added to the prediction image supplied from the prediction image selecting unit 78 by the computing unit 70, and changed into a locally decoded image. The deblocking filter 71 removes block distortion from the decoded image, and then supplies to the frame memory 72 for storage. An image before the deblocking filter processing is performed by the deblocking filter 71 is also supplied to the frame memory 72 for storage.

The switch 73 outputs the reference images stored in the frame memory 72 to the motion prediction/compensation unit 75 or intra prediction unit 74.

With this image encoding device 51, the I picture, B picture, and P picture from the screen rearranging buffer 62 are supplied to the intra prediction unit 74 as an image to be subjected to intra prediction (also referred to as intra processing), for example. Also, the B picture and P picture read out from the screen rearranging buffer 62 are supplied to the motion prediction/compensation unit 75 as an image to be subjected to inter prediction (also referred to as inter processing).

The intra prediction unit 74 performs intra prediction processing of all of the candidate intra prediction modes based on the image to be subjected to intra prediction read out from the screen rearranging buffer 62, and the reference image supplied from the frame memory 72 to generate a prediction image.

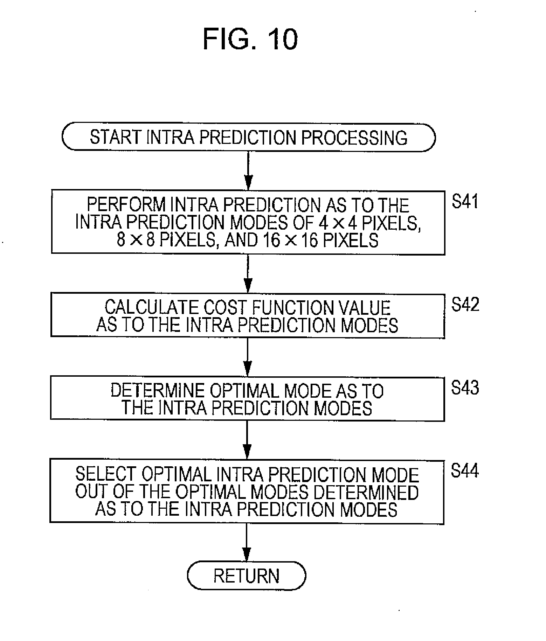

At this time, the intra prediction unit 74 calculates a cost function value as to all of the candidate intra prediction modes, and selects the intra prediction mode of which the calculated cost function value provides the minimum value, as the optimal intra prediction mode. Details of this cost function value will be described later with reference to Fig. 10.

The intra prediction unit 74 supplies the prediction image generated in the optimal intra prediction mode, and the cost function value thereof to the prediction image selecting unit 78. In the event that the prediction image generated in the optimal intra prediction mode has been selected by the prediction image selecting unit 78, the intra prediction unit 74 supplies the information indicating the optimal intra prediction mode to the lossless encoding unit 66. The lossless encoding unit 66 encodes this information, and takes this as part of the header information in a compressed image.

The motion prediction/compensation unit 75 is supplied with the image to be subjected to inter processing read out from the screen rearranging buffer 62, and the reference image from the frame memory 72 via the switch 73. The motion prediction/compensation unit 75 performs motion prediction for all candidate inter prediction modes, detects integer pixel precision motion vectors, and performs prediction of decimal pixel precision motion vectors using H.264/AVC format interpolation filters.

The motion prediction/compensation unit 75 calculates a cost function value as to all of the candidate inter prediction modes, using the predicted motion vectors. The motion prediction/compensation unit 75 determines, of the calculated cost function values, a prediction mode that provides the minimum value to be the optimal inter prediction mode, and supplies information of the determined prediction mode and the corresponding decimal pixel precision motion vector information to the adaptive interpolation filter calculating unit 76.

The motion prediction/compensation unit 75 further uses the adaptive interpolation filter of the filter coefficient calculated by the adaptive interpolation filter calculating unit 76 to perform prediction again of decimal pixel precision motion vectors for all candidate inter prediction modes, and calculates cost function values. The motion prediction/ compensation unit 75 then determines, of the calculated cost function values, a prediction mode that provides the minimum value to be the optimal inter prediction mode.

Note that hereinafter, for the sake of distinguishing, the optimal inter prediction mode determined by motion vector information predicted using the H.264/AVC format interpolation filter will be called a first optimal inter prediction mode. As opposed to this, an optimal inter prediction mode determined by motion vector information predicted using an adaptive interpolation filter of a filter coefficient calculated by the adaptive interpolation filter calculating unit 76 will be referred to as a second optimal inter prediction mode.

The motion prediction/compensation unit 75 subjects the reference image to compensation processing based on the decimal pixel precision motion vector of the second optimal inter prediction mode that has been determined, generates a prediction image, and obtains a cost function value. The motion prediction/compensation unit 75 then supplies the prediction image generated in the second optimal inter prediction mode and the cost function value thereof to the prediction image selecting unit 78. In the event that the prediction image generated in the second optimal inter prediction mode is selected by the prediction image selecting unit 78, the motion prediction/compensation unit 75 outputs information indicating the second optimal inter prediction mode (inter prediction mode information) to the lossless encoding unit 66.

At this time, motion vector information, reference frame information, and so forth, are also output to the lossless encoding unit 66. The lossless encoding unit 66 also subjects the information from the motion prediction/compensation unit 75 to lossless encoding processing such as variable length coding or arithmetic coding, and inserts into the header portion of the compressed image.

The adaptive interpolation filter calculating unit 76 is supplied with the decimal pixel precision motion vector information predicted by the motion prediction/compensation unit 75 and information of the first optimal inter prediction mode. The adaptive interpolation filter calculating unit 76 calculates, for each slice, filter coefficients for adaptive interpolation filters for large block size of block sizes greater than $8 \times 8$ and for small block size of block sizes of $8 \times 8$ or smaller, according to control signals from the block determining unit 77.

That is to say, in accordance with control signals from the block determining unit 77, the adaptive interpolation filter calculating unit 76 calculates a filter coefficient for a large block size, for motion vector information of the first optimal inter prediction mode for block sizes greater than $8 \times 8$. Also, in accordance with control signals from the block determining unit 77, the adaptive interpolation filter calculating unit 76 calculates a filter coefficient for a small block size for each slice, for motion vector information of the first optimal inter prediction mode for block sizes $8 \times 8$ or smaller.

The adaptive interpolation filter calculating unit 76 supplies the filter coefficient for large block size and small block size that have been calculated for each slice, to the motion prediction/compensation unit 75 and lossless encoding unit 66.

In accordance with the block size indicated by the first optimal inter prediction mode supplied to the adaptive interpolation filter calculating unit 76, the block determining unit 77 supplies a control signal, to control calculation of the filter coefficient for the large block size or small block size, to the adaptive interpolation filter calculating unit 76.

The prediction image selecting unit 78 determines the optimal prediction mode from the optimal intra prediction mode and the optimal inter prediction mode based on the cost function values output from the intra prediction unit 74 or motion prediction/compensation unit 75. The prediction image selecting unit 78 then selects the prediction image in the determined optimal prediction mode, and supplies to the computing units 63 and 70. At this time, the prediction image selecting unit 78 supplies the selection information of the prediction image to the intra prediction unit 74 or motion prediction/compensation unit 75.

The rate control unit 79 controls the rate of the quantization operation of the quantization unit 65 based on a compressed image stored in the storage buffer 67 so as not to cause overflow or underflow.

[Description of H.264/AVC Format]

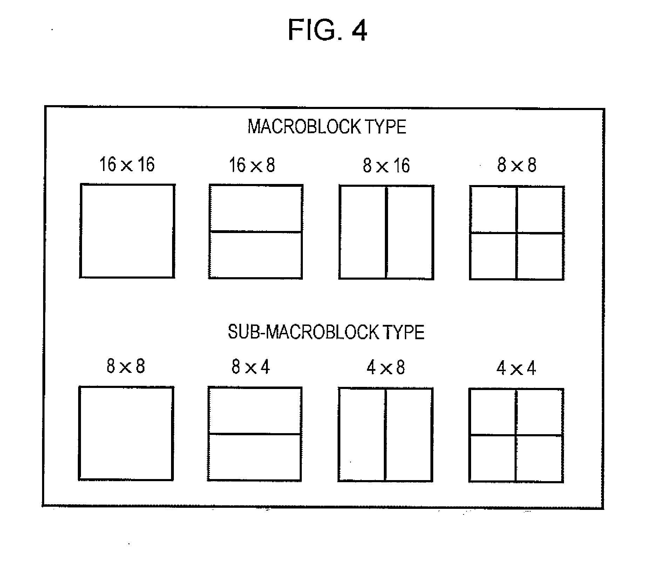

Fig. 4 is a diagram illustrating an example of the block size of motion prediction/compensation according to the H.264/AVC format. With the H.264/AVC format, motion prediction/compensation is performed with the block size taken as variable.

Macroblocks made up of $16 \times 16$ pixels divided into $16 \times 16$ pixel, $16 \times 8$ pixel, $8 \times 16$ pixel, and $8 \times 8$ pixel partitions are shown from the left in order on the upper tier in Fig. 4. Also, $8 \times 8$ pixel partitions divided into $8 \times 8$ pixel, $8 \times 4$ pixel, $4 \times 8$ pixel, and $4 \times 4$ pixel sub partitions are shown from the left in order on the lower tier in Fig. 4.

Specifically, with the H.264/AVC format, one macroblock may be divided into one of $16 \times 16$ pixel, $16 \times 8$ pixel, $8 \times 16$ pixel, and $8 \times 8$ pixel partitions with each partition having independent motion vector information. Also, an $8 \times 8$ pixel partition may be divided into one of $8 \times 8$ pixel, $8 \times 4$ pixel, $4 \times 8$ pixel, and $4 \times 4$ pixel sub partitions with each sub partition having independent motion vector information.

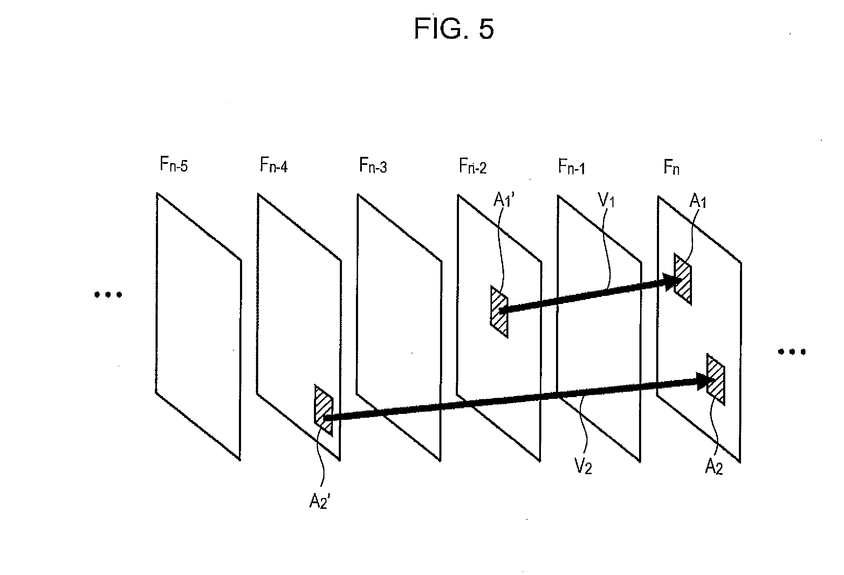

Fig. 5 is a diagram for describing the prediction/compensation processing of multi-reference frames according to the H.264/AVC format. With the H.264/AVC format, the motion prediction/compensation format of multi-reference frames (Multi-Reference Frame) has been determined.

With the example in Fig. 5, the current frame Fn to be encoded from now on, and encoded frames Fn-5 through Fn-1 are shown. The frame Fn-1 is, on the temporal axis, a frame one frame ahead of the current frame Fn, the frame Fn-2 is a frame two frames ahead of the current frame Fn, and the frame Fn-3 is a frame three frames ahead of the current frame Fn. Similarly, the frame Fn-4 is a frame four frames ahead of the current frame Fn, and the frame Fn-5 is a frame five frames ahead of the current frame Fn. In general, the closer to the current frame Fn a frame is on the temporal axis, the smaller a reference picture number (ref_id) to be added is. Specifically, the frame Fn-1 has the smallest reference picture number, and hereafter, the reference picture numbers are small in the order of Fn-2, ..., Fn-5.

With the current frame Fn, a block A1 and a block A2 are shown, a motion vector V1 is searched with assuming that the block A1 is correlated with a block A1' of the frame Fn-2 that is two frames ahead of the current frame Fn.

Similarly, a motion vector V2 is searched assuming that the block A2 is correlated with a block A1' of the frame Fn-4 that is four frames ahead of the current frame Fn.

As described above, with the H.264/AVC format, different reference frames may be referenced in one frame (picture) with multi-reference frames stored in memory. Specifically, for example, such that the block A1 references the frame Fn-2, and the block A2 references the frame Fn-4, independent reference frame information (reference picture number (ref_id)) may be provided for each block in one picture.

Here, the blocks indicate one of 16 × 16 pixel, 16 × 8 pixel, 8 × 16 pixel, and 8 × 8 pixel partitions described above with reference to Fig. 4. Reference frames within an 8 × 8 sub-block must agree.

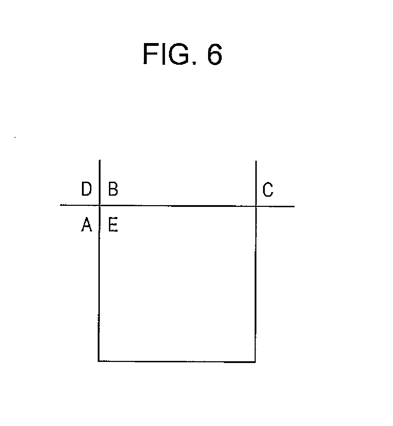

With the H.264/AVC format, by the quarter-pixel precision motion prediction/compensation processing described above with reference to Fig. 1, and the motion prediction/compensation processing described above with reference to Fig. 4 and Fig. 5 being performed, vast amounts of motion vector information are generated. If these vast amounts of motion vector information are encoded without change, this will lead to deterioration in encoding efficiency. As to this, with the H.264/AVC format, according to a method shown in Fig. 6, reduction in motion vector coding information has been realized.

Fig. 6 is a diagram for describing a motion vector information generating method according to the H.264/AVC format.

With the example in Fig. 6, a current block E to be encoded from now on (e.g., 16 × 16 pixels), and blocks A through D, which have already been encoded, adjacent to the current block E are shown.

Specifically, the block D is adjacent to the upper left of the current block E, the block B is adjacent to above the current block E, the block C is adjacent to the upper right of the current block E, and the block A is adjacent to the left of the current block E. Note that the reason why the blocks A through D are not sectioned is because each of the blocks represents a block having one structure of 16 × 16 pixels through 4 × 4 pixels described above with reference to Fig. 4.

For example, let us say that motion vector information as to X (= A, B, C, D, E) is represented with $mv_X$. First, prediction motion vector information $pmv_E$ as to the current block E is generated as with the following Expression (5) by median prediction using motion vector information regarding the blocks A, B, and C.

$$pmv_E = med(mv_A, mv_B, mv_C) \qquad ... (5)$$

The motion vector information regarding the block C may not be used (may be unavailable) due to a reason such as the edge of an image frame, before encoding, or the like. In this case, the motion vector information regarding the block D is used instead of the motion vector information regarding the block C.

Data $mvd_E$ to be added to the header portion of the compressed image, serving as the motion vector information as to the current block E, is generated as with the following Expression (6) using $pmv_E$.

$$mvd_E = mv_E - pmv_E \qquad ... (6)$$

Note that, in reality, processing is independently performed as to each of the components in the horizontal direction and vertical direction of the motion vector information.

In this way, prediction motion vector information is generated, and difference between the prediction motion vector information generated based on correlation with an adjacent block and the motion vector information is added to the header portion of the compressed image, whereby the motion vector information can be reduced.

[Description of Interpolation Processing]

Now, the processing of the adaptive interpolation filter calculating unit 76 and block determining unit 77 in Fig. 3 will be described in detail, referencing Fig. 4 again.

Of the block sizes for motion compensation shown in Fig. 4, large block sizes such as 16 × 16 pixels tend to be selected for block with little texture existing therein, or blocks moving in parallel over a wide region including a texture.

On the other hand, small block sizes such as 4 × 4 pixels tend to be selected for regions including fine textures, or regions including random motion.

Thus, which size block of the blocks for motion compensation shown in Fig. 4 will be selected reflects local features which the image has. Accordingly, this fact is applied to perform calculation processing of filter coefficients for interpolation filters applied to the local features which the image has (i.e., adaptive interpolation filters) at the adaptive interpolation filter calculating unit 76 and block determining unit 77.

That is to say, with the above-described NPL 3, filter coefficients of adaptive interpolation filters are calculated for each decimal pixel precision position such as shown in Fig. 2. On the other hand, of the block sizes shown in Fig. 4, the adaptive interpolation filter calculating unit 76 and block determining unit 77 calculate different filter coefficients for a class of block sizes greater than 8 × 8, and for a class of block sizes 8 × 8 or smaller.

Accordingly, local natures within the frame can be handled, and further, encoding efficiency can be improved.

[Configuration Example of Motion Prediction/Compensation Unit and Adaptive Interpolation Filter Calculating Unit]

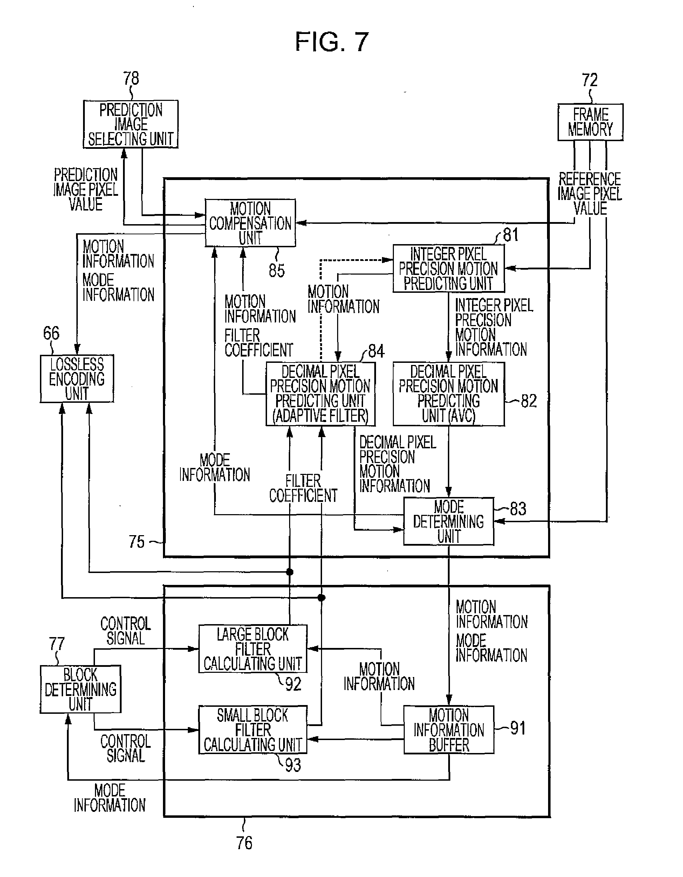

Fig. 7 is a block diagram illustrating a detailed configuration example of the motion prediction/compensation unit 75 and adaptive interpolation filter calculating unit 76. Note that the switch 73 in Fig. 3 is omitted from Fig. 7.

In the example in Fig. 7, the motion prediction/compensation unit 75 is configured of an integer pixel precision motion prediction unit 81, a decimal pixel precision motion prediction unit 82, a mode determining unit 83, a decimal pixel precision motion prediction unit 84, and a motion compensation unit 85. Note that with the motion prediction/ compensation unit 75, decimal pixel precision motion vectors are obtained based on a motion search method implemented in JM (Joint Model) described above with reference to Fig. 2. That is to say, integer pixel precision motion search is performed by the integer pixel precision motion prediction unit 81, decimal pixel precision motion search is performed by the decimal pixel precision motion prediction unit 82 or 84, and decimal pixel precision motion vector information is obtained.

The adaptive interpolation filter calculating unit 76 is configured of a motion information buffer 91, a large block filter calculating unit 92, and a small block filter calculating unit 93.

Integer pixel precision reference image pixel values are supplied from the frame memory 72 to the integer pixel precision motion prediction unit 81, mode determining unit 83, and motion compensation unit 85. Also, while omitted from illustration in the example in Fig. 7, an image for inter processing from the screen rearranging buffer 62 is supplied to the integer pixel precision motion prediction unit 81, decimal pixel precision motion prediction units 82 and 84, mode determining unit 83, and motion compensation unit 85.

The integer pixel precision motion prediction unit 81 performs integer pixel precision motion search on the current block for all candidate inter prediction modes, using the image for inter processing and the integer pixel precision reference image pixel values. That is to say, with the integer pixel precision motion prediction unit 81, an integer pixel precision motion vector which minimizes a cost function value such as SAD (Sum of Absolute Difference) or the like within a predetermined search range is obtained for all candidate inter prediction modes. The integer pixel precision motion vector information for the current block that have been obtained are supplied to the decimal pixel precision motion prediction units 82 and 84 along with necessary integer pixel precision reference image pixel values.

The decimal pixel precision motion prediction unit 82 performs decimal pixel precision motion search for the current block in all candidate inter prediction modes, using the image for inter processing, the integer pixel precision motion vector information, and the integer pixel precision reference image pixel values. At this time, the decimal pixel precision motion prediction unit 82 obtains half-pixel precision decimal pixel precision motion vector information which minimizes the above-described cost function (SAD), using an interpolation filter of the H.264/AVC format described above with reference to Fig. 1. Furthermore, quarter-pixel precision decimal pixel precision motion vector information which minimizes the above-described cost function (SAD) is obtained. The obtained decimal pixel precision motion vector information is supplied to the mode determining unit 83.

The mode determining unit 83 calculates a cost function value described later with reference to Fig. 10 for all candidate inter prediction modes regarding which the decimal pixel precision motion vectors have been obtained by the decimal pixel precision motion prediction unit 82. The mode determining unit 83 determines the inter prediction mode regarding which the calculated cost function value yields the smallest value to be the first optimal inter prediction mode of the current block. The mode determining unit 83 supplies information of the first optimal inter prediction mode that has been determined, and the decimal pixel precision motion vector information corresponding thereto, to the motion information buffer 91.

Also, the mode determining unit 83 calculates the cost function value described later with reference to Fig. 10 for all candidate inter prediction modes regarding which the decimal pixel precision motion vectors have been obtained by the decimal pixel precision motion prediction unit 84. The mode determining unit 83 selects the inter prediction mode regarding which the recalculated cost function value yields the smallest value as the second optimal inter prediction mode of the current block, and supplies information of the second optimal inter prediction mode that has been selected to the motion compensation unit 85.

The decimal pixel precision motion prediction unit 84 is supplied from the large block filter calculating unit 92 with a filter coefficient for large block sizes larger than 8 × 8, calculated as to the current slice. Also, the decimal pixel precision motion prediction unit 84 is supplied from the small block filter calculating unit 93 with filter coefficient for small

block sizes 8 $\times$ 8 or smaller, calculated as to the current slice.

The decimal pixel precision motion prediction unit 84 performs decimal pixel precision motion search for the current block in all candidate inter prediction modes, using the image for inter processing, the integer pixel precision motion vector information, and the integer pixel precision reference image pixel values. At this time, the decimal pixel precision motion prediction unit 84 obtains half-pixel precision decimal pixel precision motion vector information which minimizes the above-described cost function (SAD), using an interpolation filter with the calculated filter coefficient. Furthermore, quarter-pixel precision decimal pixel precision motion vector information which minimizes the above-described cost function (SAD) is obtained. The obtained decimal pixel precision motion vector information for each block and filter coefficient for the adaptive interpolation filter for each slice are supplied to the mode determining unit 83 and motion compensation unit 85.

Note that at this time, an arrangement may be made where, in addition to decimal pixel precision motion prediction, the integer pixel precision motion prediction unit 81 is instructed to redo integer pixel precision motion prediction, as indicated by the dotted line. Change in motion vector information in surrounding blocks due to the interpolation filter being changed also affects motion search for the current block, so even in the event that the filter coefficient is only applied to decimal pixel precision, integer pixel precision motion prediction is affected as well.

The motion compensation unit 85 is supplied with the image for inter from the screen rearranging buffer 62 and integer pixel precision reference image pixel values from the frame memory 72. Furthermore, the motion compensation unit 85 is also supplied with decimal pixel precision motion vector information and filter coefficient for each slice from the decimal pixel precision motion prediction unit 84, second optimal inter prediction mode information and difference motion vector information from the mode determining unit 83, and so forth.

The motion compensation unit 85 generates a prediction image by performing interpolation of decimal pixel precision pixel values in the second optimal inter prediction mode from the mode determining unit 83 using the integer pixel precision reference image pixel values, decimal pixel precision motion vector information, and filter coefficients. The motion compensation unit 85 further calculates the cost function value for that second optimal inter prediction mode using the image for inter and so forth, and supplies the generated prediction image and the cost function value thereof to the prediction image selecting unit 78.

In the event that the prediction image of the second optimal inter prediction mode is selected by the prediction image selecting unit 78, the motion compensation unit 85 outputs information indicating the second optimal inter prediction mode, motion vector information (actually difference motion vector information), reference frame information, and so forth, to the lossless encoding unit 66.

The motion information buffer 91 stores the first optimal inter prediction mode taken as optimal from the mode determining unit 83, and the corresponding decimal pixel precision motion vector information, for the current block.

The large block filter calculating unit 92 and small block filter calculating unit 93 are supplied with the decimal pixel precision motion vector information from the motion information buffer 91.

Of the decimal pixel precision motion vector information from the motion information buffer 91, the large block filter calculating unit 92 uses only the motion vector information corresponding to the control signal input from the block determining unit 77 to perform calculation processing of filter coefficients for large block sizes. That is to say, with the large block filter calculating unit 92, large block size filter coefficients are calculated such that the prediction residual is minimal, using only motion vector information of blocks with a block size greater than 8 $\times$ 8 pixels for the current slice.

Of the decimal pixel precision motion vector information from the motion information buffer 91, the small block filter calculating unit 93 uses only the motion vector information corresponding to the control signal input from the block determining unit 77 to perform calculation processing of filter coefficients for small block sizes. That is to say, with the small block filter calculating unit 93, small block size filter coefficients are calculated such that the prediction residual is minimal, using only motion vector information of blocks with a block size of 8 $\times$ 8 pixels or smaller for the current slice.

Filter coefficients for the large block size and small block size calculated for each slice are each supplied to the motion prediction/compensation unit 75 and lossless encoding unit 66.

The block determining unit 77 determines the block size for the first optimal inter prediction mode stored in the motion information buffer 91, and outputs a control signal to the large block filter calculating unit 92 or small block filter calculating unit 93 in accordance with the determination results. Specifically, in the event that the block size is greater than an 8 $\times$ 8 pixel block, the block determining unit 77 outputs a control signal to the large block filter calculating unit 92 to cause filter calculation processing to be performed. On the other hand, in the event that the block size is an 8 $\times$ 8 pixel block or smaller, the block determining unit 77 outputs a control signal to the small block filter calculating unit 93 to cause filter calculation processing to be performed.

That is to say, by outputting a control signal to one of the large block filter calculating unit 92 or small block filter calculating unit 93, the block determining unit 77 classifies the blocks into a class of block sizes greater than 8 $\times$ 8 and a class of block sizes 8 $\times$ 8 or smaller. Then, at the large block filter calculating unit 92 or small block filter calculating unit 93, only the motion vector information of the classified class is used for filter coefficient calculation of the relevant class.

[Description of Encoding Processing of Image Encoding Device]

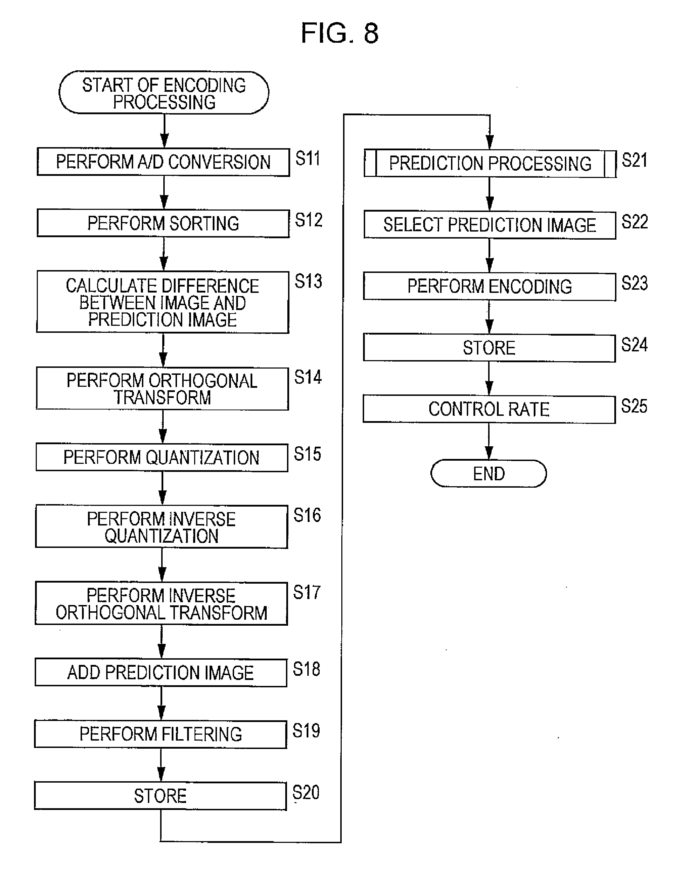

Next, the encoding processing of the image encoding device 51 in Fig. 3 will be described with reference to the flowchart in Fig. 8.

In step S11, the A/D conversion unit 61 converts an input image from analog to digital. In step S12, the screen rearranging buffer 62 stores the image supplied from the A/D conversion unit 61, and performs rearranging from the sequence for displaying the pictures to the sequence for encoding.

In step S13, the computing unit 63 computes difference between an image rearranged in step S12 and the prediction image. The prediction image is supplied to the computing unit 63 from the motion prediction/compensation unit 75 in the event of performing inter prediction, and from the intra prediction unit 74 in the event of performing intra prediction, via the prediction image selecting unit 78.

The difference data is smaller in the data amount as compared to the original image data. Accordingly, the data amount can be compressed as compared to the case of encoding the original image without change.

In step S14, the orthogonal transform unit 64 subjects the difference information supplied from the computing unit 63 to orthogonal transform. Specifically, orthogonal transform, such as discrete cosine transform, Karhunen-Loéve transform, or the like, is performed, and a transform coefficient is output. In step S15, the quantization unit 65 quantizes the transform coefficient. At the time of this quantization, a rate is controlled such that later-described processing in step S25 will be described.

The difference information thus quantized is locally decoded as follows. Specifically, in step S16, the inverse quantization unit 68 subjects the transform coefficient quantized by the quantization unit 65 to inverse quantization using a property corresponding to the property of the quantization unit 65. In step S17, the inverse orthogonal transform unit 69 subjects the transform coefficient subjected to inverse quantization by the inverse quantization unit 68 to inverse orthogonal transform using a property corresponding to the property of the orthogonal transform unit 64.

In step S18, the computing unit 70 adds the prediction image input via the prediction image selecting unit 78 to the locally decoded difference information, and generates a locally decoded image (the image corresponding to the input to the computing unit 63). In step S19, the deblocking filter 71 subjects the image output from the computing unit 70 to filtering. Thus, block distortion is removed. In step S20, the frame memory 72 stores the image subjected to filtering. Note that an image not subjected to filtering processing by the deblocking filter 71 is also supplied from the computing unit 70 to the frame memory 72 for storing.

In step S21, the intra prediction unit 74 and motion prediction/compensation unit 75 each perform image prediction processing. Specifically, in step S21, the intra prediction unit 74 performs intra prediction processing in the intra prediction mode. The motion prediction/compensation unit 75 performs motion prediction and compensation processing in the inter prediction mode.

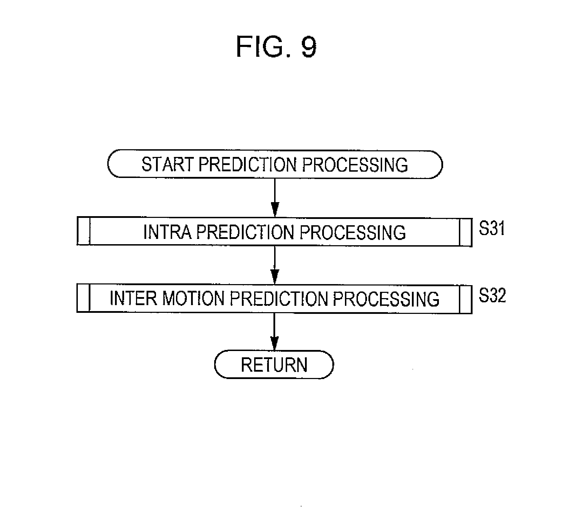

While details of prediction processing in step S21 will be described later with reference to Fig. 9, first, due to this processing, prediction processing is performed in each of all of the candidate intra prediction modes, and cost function values are each obtained for all of the candidate intra prediction modes. Then, based on the calculated cost function values, an optimal intra prediction mode is selected, and a prediction image generated by intra prediction in the optimal intra prediction mode, and the cost function value thereof, are supplied to the prediction image selecting unit 78.

Also, due to this processing, prediction processing is performed in each of all the candidate inter prediction modes, and cost function values are each obtained for all of the candidate inter prediction modes. Based on the calculated cost function values, an optimal inter prediction mode is selected from the inter prediction modes.

Note that specifically, decimal pixel precision motion vectors are predicted for all inter prediction modes using H.264/AVC format interpolation filters, and as a result of having calculated cost function values, the first optimal inter prediction mode is obtained. Then, a filter coefficient for large block sizes and a filter coefficient for small block sizes are calculated in accordance with the block size of the first optimal inter prediction mode, for each slice. Further, a decimal pixel precision motion vector is re-predicted using the filter coefficient of the adaptive interpolation filter that has been calculated, and as a result of having calculated cost function values, the second optimal inter prediction mode is obtained.

A prediction image generated in the second optimal inter prediction mode and the cost function value thereof are then supplied to the prediction image selecting unit 78. Also, the filter coefficients calculated for each slice are supplied to the lossless encoding unit 66.

In step S22, the prediction image selecting unit 78 determines one of the optimal intra prediction mode and the optimal inter prediction mode to be the optimal prediction mode based on the cost function values output from the intra prediction unit 74 and the motion prediction/compensation unit 75. The prediction image selecting unit 78 then selects the prediction image in the determined optimal prediction mode, and supplies to the computing units 63 and 70. This prediction image is, as described above, used for calculations in steps S13 and S18.

Note that the selection information of this prediction image is supplied to the intra prediction unit 74 or motion prediction/compensation unit 75. In the event that the prediction image in the optimal intra prediction mode has been selected, the intra prediction unit 74 supplies information indicating the optimal intra prediction mode (i.e., intra prediction mode information) to the lossless encoding unit 66.

In the event that the prediction image in the optimal inter prediction mode has been selected, the motion prediction/compensation unit 75 outputs information indicating the optimal inter prediction mode, and further, if necessary, information according to the optimal inter prediction mode, to the lossless encoding unit 66. Examples of the information according to the optimal inter prediction mode include motion vector information, reference frame information, and so forth.

In step S23, the lossless encoding unit 66 encodes the quantized transform coefficient output from the quantization unit 65. Specifically, the difference image is subjected to lossless encoding such as variable length coding, arithmetic coding, or the like, and compressed. At this time, the intra prediction mode information from the intra prediction unit 74, or the information according to the optimal inter prediction mode from the motion prediction/compensation unit 75, and so forth input to the lossless encoding unit 66 in step S22 described above are also encoded, and added to the header information. Further, the filter coefficient from the adaptive interpolation filter calculating unit 76 is also encoded.

For example, information indicating the inter prediction mode is encoded for each macroblock. The motion vector information and reference frame information are encoded for each current block. The calculated filter coefficients are encoded for each slice.

In step S24, the storage buffer 67 stores the difference image as the compressed image. The compressed image stored in the storage buffer 67 is read out as appropriate, and transmitted to the decoding side via the transmission path.

In step S25, the rate control unit 79 controls the rate of the quantization operation of the quantization unit 65 based on the compressed image stored in the storage buffer 67 so as not to cause overflow or underflow.

[Description of Prediction Processing]

Next, the prediction processing in step S21 in Fig. 8 will be described with reference to the flowchart in Fig. 9.

In the event that the image to be processed, supplied from the screen rearranging buffer 62, is an image in a block to be subjected to intra processing, the decoded image to be referenced is read out from the frame memory 72, and supplied to the intra prediction unit 74 via the switch 73. In step S31, based on these images, the intra prediction unit 74 performs intra prediction as to the pixels in the block to be processed using all of the candidate intra prediction modes. Note that pixels not subjected to deblocking filtering by the deblocking filter 71 are used as the decoded pixels to be referenced.

While the details of the intra prediction processing in step S31 will be described later with reference to Fig. 10, according to this processing, intra prediction is performed using all of the candidate intra prediction modes, and a cost function value is calculated as to all of the candidate intra prediction modes. The optimal intra prediction mode is then selected based on the calculated cost function values, and the prediction image generated by the intra prediction in the optimal intra prediction mode, and the cost function value thereof are supplied to the prediction image selecting unit 78.

In the event that the image to be processed supplied from the screen rearranging buffer 62 is an image to be subjected to inter processing, the image to be referenced is read out from the frame memory 72, and supplied to the motion prediction/compensation unit 75 via the switch 73. In step S32, based on these images, the motion prediction/compensation unit 75 performs inter motion prediction processing. That is to say, the motion prediction/compensation unit 75 references the image supplied from the frame memory 72 to perform motion prediction processing in all candidate inter prediction modes.

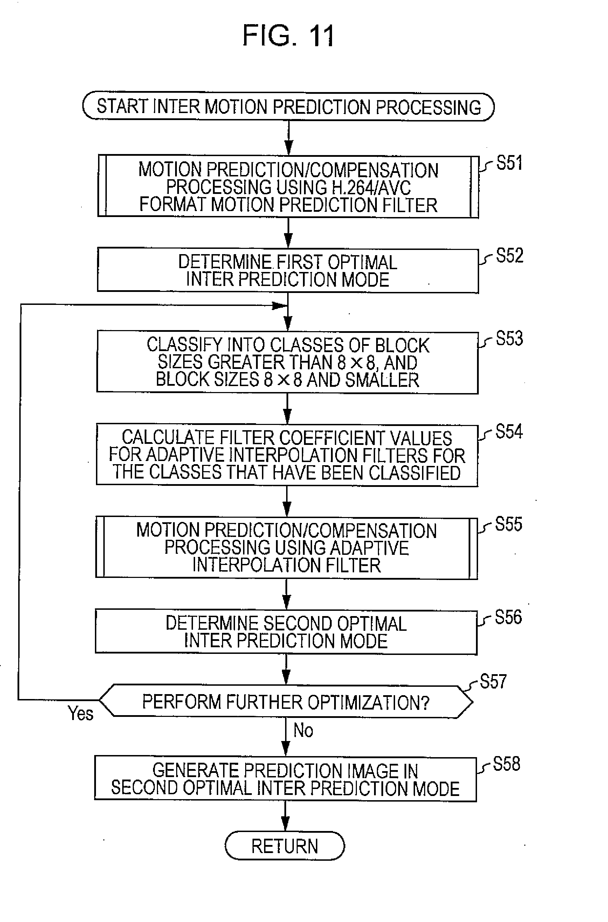

While the details of the inter motion prediction processing in step S32 will be described later with reference to Fig. 11, according to this processing, motion prediction processing is performed in all of the candidate inter prediction modes using an H.264/AVC format interpolation filter, and a cost function value is calculated for each of all candidate inter prediction modes. Based on the calculated cost function values, the first optimal inter prediction mode is then determined, and a filter coefficient for large block sizes and a filter coefficient for small block sizes are calculated in accordance with the block size of the first optimal inter prediction mode.

Further, a decimal pixel precision motion vector is re-predicted using the filter coefficient of the adaptive interpolation filter that has been calculated, and as a result of having calculated cost function values, the second optimal inter prediction mode is obtained. The prediction image generated in the second optimal inter prediction mode that has been determined, and the cost function value thereof, are supplied to the prediction image selecting unit 78.

[Description of Intra prediction Processing]

Next, the intra prediction processing in step S31 in Fig. 9 will be described with reference to the flowchart in Fig. 10. Note that, with the example in Fig. 10, description will be made regarding a case of a luminance signal as an example.

In step S41, the intra prediction unit 74 performs intra prediction as to the intra prediction modes of $4 \times 4$ pixels,

8 × 8 pixels, and 16 × 16 pixels.

With regard to intra prediction modes for a luminance signal, there are provided prediction modes in nine kinds of block units of 4 × 4 pixels and 8 × 8 pixels, and in four kinds of macroblock units of 16 × 16 pixels, and with regard to intra prediction modes for a color difference signal, there are provided four kinds of prediction modes in block units of 8 × 8 pixels. The intra prediction modes for color difference signals may be set independently from the intra prediction modes for luminance signals. With regard to the intra prediction modes of 4 × 4 pixels and 8 × 8 pixels of a luminance signal, one intra prediction mode is defined for each luminance signal block of 4 × 4 pixels and 8 × 8 pixels. With regard to the intra prediction mode of 16 × 16 pixels of a luminance signal, and the intra prediction mode of a color difference signal, one prediction mode is defined as to one macroblock.

Specifically, the intra prediction unit 74 performs intra prediction as to the pixels in the block to be processed with reference to the decoded image read out from the frame memory 72 and supplied via the switch 73. This intra prediction processing is performed in the intra prediction modes, and accordingly, prediction images in the intra prediction modes are generated. Note that pixels not subjected to deblocking filtering by the deblocking filter 71 are used as the decoded pixels to be referenced.

In step S42, the intra prediction unit 74 calculates a cost function value as to the intra prediction modes of 4 × 4 pixels, 8 × 8 pixels, and 16 × 16 pixels. Here, calculation of a cost function value is performed based on one of the techniques of a High Complexity mode or Low Complexity mode. These modes are determined in JM that is reference software in the H.264/AVC format.

Specifically, in the High Complexity mode, tentatively, up to encoding processing is performed as to all of the candidate prediction modes the processing in step S41. A cost function value represented with the following Expression (7) is then calculated as to the prediction modes, and a prediction mode that provides the minimum value thereof is selected as the optimal prediction mode.

$$Cost(Mode) = D + \lambda \cdot R \qquad ... (7)$$

D denotes difference (distortion) between the raw image and a decoded image, R denotes a generated code amount including an orthogonal transform coefficient, and $\lambda$ denotes a LaGrange multiplier to be provided as a function of a quantization parameter QP.

On the other hand, in the Low Complexity mode, a prediction image is generated, and up to header bits of motion vector information, prediction mode information, flag information, and so forth are calculated as to all of the candidate prediction modes as the processing in step S41. A cost function value represented with the following Expression (8) is then calculated as to the prediction modes, and a prediction mode that provides the minimum value thereof is selected as the optimal prediction mode.

$$Cost(Mode) = D + QPtoQuant(QP) \cdot Header\_Bit \; ... (8)$$

D denotes difference (distortion) between the raw image and a decoded image, Header_Bit denotes header bits as to a prediction mode, and QPtoQuant is a function to be provided as a function of the quantization parameter QP.

In the Low Complexity mode, a prediction image is only generated as to all of the prediction modes, and there is no need to perform encoding processing and decoding processing, and accordingly, a calculation amount can be reduced.

In step S43, the intra prediction unit 74 determines the optimal mode for each of the intra prediction modes of 4 × 4 pixels, 8 × 8 pixels, and 16 × 16 pixels. Specifically, as described above, in the event of the intra 4 × 4 prediction mode and intra 8 × 8 prediction mode, the number of prediction mode types is nine, and in the event of the intra 16 × 16 prediction mode, the number of prediction mode types is four. Accordingly, the intra prediction unit 74 determines, based on the cost function values calculated in step S42, the optimal intra 4 × 4 prediction mode, optimal intra 8 × 8 prediction mode, and optimal intra 16 × 16 prediction mode out thereof.

In step S44, the intra prediction unit 74 selects the optimal intra prediction mode out of the optimal modes determined as to the intra prediction modes of 4 × 4 pixels, 8 × 8 pixels, and 16 × 16 pixels based on the cost function values calculated in step S42. Specifically, the intra prediction unit 74 selects a mode of which the cost function value is the minimum value out of the optimal modes determined as to 4 × 4 pixels, 8 × 8 pixels, and 16 × 16 pixels, as the optimal intra prediction mode. The intra prediction unit 74 then supplies the prediction image generated in the optimal intra prediction mode, and the cost function value thereof to the prediction image selecting unit 78.

[Description of Inter Motion Prediction Processing]

Next, the inter motion prediction processing in step S32 of Fig. 9 will be described with reference to the flowchart in Fig. 11. Note that with the motion prediction/compensation unit 75, based on the motion searching method implemented in JM described above with reference to Fig. 2, a motion vector of integer pixel precision is obtained, and a motion vector of decimal pixel precision is obtained.

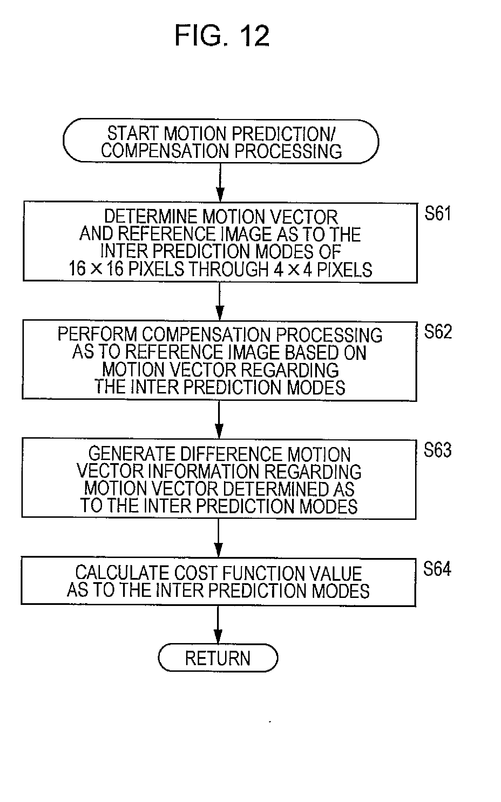

In step S51, the integer pixel precision motion prediction unit 81, decimal pixel precision motion prediction unit 82, and mode determining unit 83 execute motion prediction/compensation processing using the H.264/AVC format interpolation filter. Note that details of this motion prediction/compensation processing will be described later with reference to Fig. 12.

Due to this processing, an integer pixel precision motion vector is obtained for the current block which is the object of encoding processing, for all candidate inter prediction modes, and decimal pixel precision motion vector information is obtained using the H.264/AVC format interpolation filter. Cost function values are then calculated for all candidate inter prediction modes.

In step S52, the mode determining unit 83 determines the inter prediction mode yielding the smallest value for the cost function value calculated in step S51 to be the first optimal inter prediction mode for the current block. The mode determining unit 83 supplies the information of the first optimal inter prediction mode that has been determined, and decimal pixel precision motion vector information corresponding thereto, to the motion information buffer 91.

In step S53, the block determining unit 77 classifies the block sizes of the first optimal inter prediction mode as to the current blocks stored in the motion information buffer 91 into a class of block sizes greater than $8 \times 8$ and a class of block sizes $8 \times 8$ or smaller.

Specifically, the block size determining unit 77 determines the block sizes for the first optimal inter prediction mode of the current blocks stored in the motion information buffer 91. In the event that the block size is greater than an $8 \times 8$ pixel block, the block size determining unit 77 outputs a control signal to the large block filter calculating unit 92 to cause filter calculation processing to be performed. Also, in the event that the block size is an $8 \times 8$ pixel block or smaller, the block size determining unit 77 outputs a control signal to the small block filter calculating unit 93 to cause filter calculation processing to be performed.

As a result, a control signal is input to the large block filter calculating unit 92 only in the event that the block size is a block greater than $8 \times 8$ pixels, and a control signal is input to the small block filter calculating unit 93 only in the event that the block size is a block $8 \times 8$ pixels or smaller.

That is to say, the block determining unit 77 classifies blocks in the slice into a class of block sizes greater than $8 \times 8$ and a class of block sizes $8 \times 8$ or smaller, by outputting a control signal to one or the other of the large block filter calculating unit 92 and small block filter calculating unit 93.

In step S54, the large block filter calculating unit 92 and small block filter calculating unit 93 each calculate a filter coefficient value for the adaptive interpolation filter, for each classified class, for each slice.

Specifically, of the decimal pixel precision motion vector information from the motion information buffer 91, the large block filter calculating unit 92 uses only the motion vector information of the current block corresponding to a control signal input from the block determining unit 77, to perform calculation processing for a large block size filter coefficient. Of the decimal pixel precision motion vector information from the motion information buffer 91, the small block filter calculating unit 93 uses only the motion vector information of the current block corresponding to a control signal input from the block determining unit 77, to perform calculation processing for a small block size filter coefficient.

That is to say, the large block filter calculating unit 92 calculates a large block size filter coefficient value such that the prediction residual is minimal, using only the motion vector information of the class to which blocks of block sizes greater than $8 \times 8$ pixels have been classified in the slice. The small block filter calculating unit 93 calculates a small block size filter coefficient value such that the prediction residual is minimal, using only the motion vector information of the class to which blocks of block sizes $8 \times 8$ pixels or smaller have been classified in the slice.

The large block size filter coefficient and small block size filter coefficient that have been calculated for the current slice are supplied to the decimal pixel precision motion prediction unit 84 and lossless encoding unit 66. These filter coefficients for each slice are encoded in step S23 in Fig. 8.

In step S55, the integer pixel precision motion prediction unit 81, decimal pixel precision motion prediction unit 84, and mode determining unit 83 execute motion prediction/compensation processing using the adaptive interpolation filter made up of the calculated filter coefficient values in step S55. Note that details of this motion prediction/compensation processing will be described later with reference to Fig. 12.

Note that the processing in Fig. 12 is an example of processing in a case of re-obtaining from the integer pixel precision motion vector information. As opposed to this, with the motion prediction/compensation processing in step S55, re-obtaining may be performed using only the decimal pixel precision motion vector, without re-obtaining the integer pixel precision motion vector information.

Due to this processing, an integer pixel precision motion vector is obtained for the current block for all candidate inter prediction modes, and decimal pixel precision motion vector information is obtained using the adaptive interpolation filter. Cost function values are then calculated for all candidate inter prediction modes.

In step S56, the mode determining unit 83 determines the inter prediction mode of which the cost function value calculated in step S55 yields the smallest value as the second optimal inter prediction mode for the current block.

In step S57, the mode determining unit 83 determines whether or not to perform further optimization. For example, in the event that the user has set the number of times of optimization, determination is made in step S57 to perform optimization until that number of times of optimization is reached, the processing returns to step S53, and the subsequent processing is repeated.

In this case, information of the second optimal inter prediction mode that has been determined, and decimal pixel precision motion vector information corresponding thereto, are supplied from the mode determining unit 83 to the motion information buffer 91, and a third optimal inter prediction mode is determined at the mode determining unit 83 in subsequent processing. Thus, filter coefficients can be further optimized by repeating the number of times of optimization.

In the event that determination is made in step S57 not to perform optimization, the mode determining unit 83 supplies the information of the second optimal inter prediction mode that has been determined to the motion compensation unit 85.

In step S58, the motion compensation unit 85 generates a prediction image of the current block in the second optimal inter prediction mode from the mode determining unit 83. That is to say, the motion compensation unit 85 generates a prediction image of the current block by interpolating decimal pixel precision pixel values, using the integer pixel precision reference image pixel values from the frame memory 72, decimal pixel precision motion vector information of the second optimal inter prediction mode, and the adaptive interpolation filter. The motion compensation unit 85 then calculates the cost function value of the second optimal inter prediction mode, and supplies the generated prediction image and the cost function value thereof to the prediction image selecting unit 78.

Next, the motion prediction/compensation processing of steps S51 or S55 in Fig. 11 will be described with reference to the flowchart in Fig. 12. Note that the processing of steps S51 and S55 in Fig. 11 differ only in the interpolation filter used, so description will be made for the processing in step S55 for the example in Fig. 12.

In step S61, the integer pixel precision motion prediction unit 81 and decimal pixel precision motion prediction unit 84 each determine motion vectors and reference images for each of the eight types of inter prediction modes made up of $16 \times 16$ pixels through $4 \times 4$ pixels, described above with reference to Fig. 4.

That is to say, the integer pixel precision motion prediction unit 81 is supplied with the image for inter processing from the screen rearranging buffer 62, and reference image pixel values of integer pixel precision from the frame memory 72. The integer pixel precision motion prediction unit 81 uses these images to obtain an integer pixel precision motion vector and reference image yielding the smallest cost function value such as SAD or the like within a predetermined search range of a candidate reference image, for each of the inter prediction modes. Thus, the integer pixel precision motion vector and reference image are each determined for the current block to be processed in each of the inter prediction modes, and the integer pixel precision motion vector information and integer pixel precision reference image pixel values are supplied to the decimal pixel precision motion prediction unit 84.

The decimal pixel precision motion prediction unit 84 performs decimal pixel precision motion search for the current block for all candidate inter prediction modes, using the image for inter processing, integer pixel precision motion vector information, and integer pixel precision reference image pixel values. At this time, the decimal pixel precision motion prediction unit 84 obtains a decimal pixel precision motion vector information of half-pixel precision yielding the smallest cost function such as SAD or the like, using the adaptive interpolation filter of the filter coefficient calculated by the large block filter calculating unit 92 or small block filter calculating unit 93. The decimal pixel precision motion prediction unit 84 then further obtains decimal pixel precision motion vector information of quarter-pixel precision yielding the smallest cost function value such as SAD or the like. The obtained decimal pixel precision motion vector information of the current block and filter coefficient for the adaptive interpolation filter for each slice are supplied to the mode determining unit 83 and motion compensation unit 85.

The mode determining unit 83 performs the processing of the following steps S62 through S64 to calculate the cost function values shown in the above described Expression (7) or Expression (8).

That is to say, in step S62, the mode determining unit 83 performs compensation processing on the reference image, based on the decimal pixel precision motion vector from the decimal pixel precision motion prediction unit 84. Specifically, the mode determining unit 83 generates a prediction image of the current block by performing interpolation of decimal pixel precision pixel values, using the integer pixel precision reference image pixel values from the frame memory 72, decimal pixel precision motion vector information, and a filter coefficient of an adaptive motion prediction filter.

In step S63, the mode determining unit 83 generates difference motion vector information $mvd_E$ regarding the motion vectors determined as to the eight types of inter prediction modes made up of $16 \times 16$ pixels through $4 \times 4$ pixels. At this time, the motion vector generating method described above with reference to Fig. 6 is used.

Specifically, the mode determining unit 83 uses adj acent block motion vector information to calculate prediction motion vector information $pmv_E$ as to the current block E by median prediction with the above-described Expression (5). The mode determining unit 83 then obtains difference motion vector information $mvd_E$ from the difference between the motion vector information $mv_E$ from the decimal pixel precision motion prediction unit 84 and the prediction motion vector information $pmv_E$ that has been calculated, as shown in the above-described Expression (6).

The obtained calculated difference motion vector information is used at the time of calculating the cost function value in the next step S64, and in the event that the prediction image selecting unit 78 ultimately selects the corresponding prediction image, this is supplied to the motion compensation unit 85 along with the prediction mode information, filter coefficient, and reference frame information and so forth, to be supplied to the lossless encoding unit 66.

In step S64, the mode determining unit 83 calculates the cost function values shown in the above-described Expression (7) or Expression (8) for each of the eight types of inter prediction modes made up of $16 \times 16$ pixels through $4 \times 4$ pixels.

Specifically, the mode determining unit 83 calculates the cost function value, using the image for inter processing from the screen rearranging buffer 62, integer pixel precision reference image pixel values from the frame memory 72, decimal pixel precision motion vector information, filter coefficient of the adaptive interpolation filter, and difference motion vector information and so forth. The cost function value calculated here is used at the time of determining the second optimal inter prediction mode in step S56 in Fig. 11 described above.

The compressed image that has been encoded is transmitted over a predetermined transmission path, and decoded by an image decoding device.

[Configuration Example of Image Decoding Device]

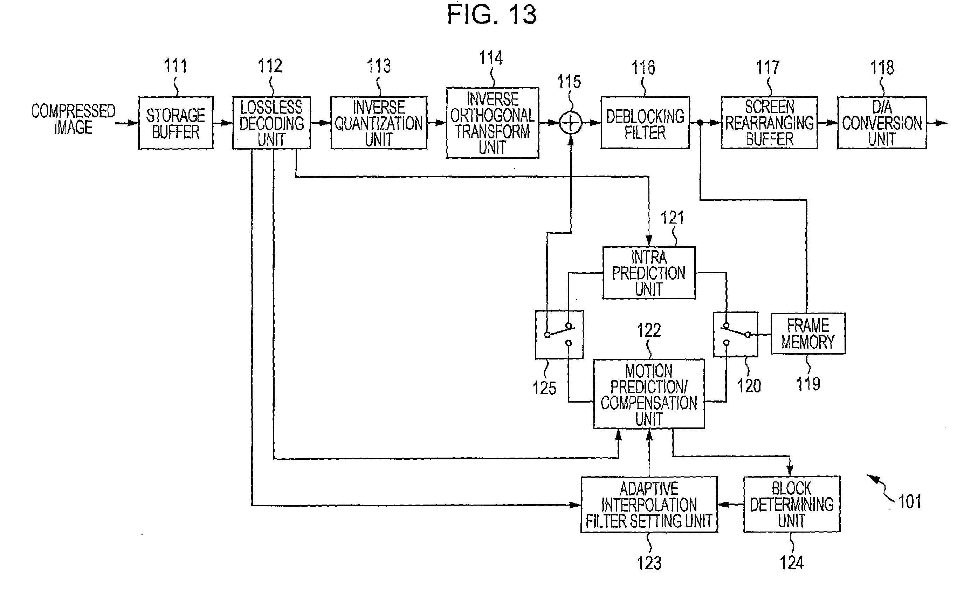

Fig. 13 represents the configuration of an embodiment of an image decoding device serving as the image processing device to which has been applied.

An image decoding device 101 is configured of an storage buffer 111, a lossless decoding unit 112, an inverse quantization unit 113, an inverse orthogonal transform unit 114, a computing unit 115, a deblocking filter 116, a screen rearranging buffer 117, a D/A conversion unit 118, frame memory 119, a switch 120, an intra prediction unit 121, a motion prediction/compensation unit 122, an adaptive interpolation filter setting unit 123, a block determining unit 124, and a switch 125.

The storage buffer 111 stores a transmitted compressed image. The lossless decoding unit 112 decodes information supplied from the storage buffer 111 and encoded by the lossless encoding unit 66 in Fig. 3 using a format corresponding to the encoding format of the lossless encoding unit 66. The inverse quantization unit 113 subjects the image decoded by the lossless decoding unit 112 to inverse quantization using a format corresponding to the quantization format of the quantization unit 65 in Fig. 3. The inverse orthogonal transform unit 114 subjects the output of the inverse quantization unit 113 to inverse orthogonal transform using a format corresponding to the orthogonal transform format of the orthogonal transform unit 64 in Fig. 3.

The output subject to inverse orthogonal transform is decoded by being added with the prediction image supplied from the switch 125 by the computing unit 115. The deblocking filter 116 removes the block distortion of the decoded image, then supplies to the frame memory 119 for storage, and also outputs to the screen rearranging buffer 117.

The screen rearranging buffer 117 performs rearranging of images. Specifically, the sequence of frames rearranged for encoding sequence by the screen rearranging buffer 62 in Fig. 3 is rearranged to the original display sequence. The D/A conversion unit 118 converts the image supplied from the screen rearranging buffer 117 from digital to analog, and outputs to an unshown display for display.

The switch 120 reads out an image to be subjected to inter processing and an image to be referenced from the frame memory 119, outputs to the motion prediction/compensation unit 122, and also reads out an image to be used for intra prediction from the frame memory 119, and supplies to the intra prediction unit 121.

Information indicating the intra prediction mode obtained by decoding the header information is supplied from the lossless decoding unit 112 to the intra prediction unit 121. The intra prediction unit 121 generates, based on this information, a prediction image, and outputs the generated prediction image to the switch 125.

Of the information obtained by decoding the header information, the inter prediction mode information, motion vector information, reference frame information, and so forth are supplied from the lossless decoding unit 112 to the motion prediction/compensation unit 122. The inter prediction mode information is transmitted thereto for each macroblock. The Motion vector information and reference frame information are transmitted thereto for each current block.

The motion prediction/compensation unit 122 generates pixel values of the prediction image for the current block in the prediction mode which the inter prediction mode information supplied from the lossless decoding unit 112 indicates. At this time, the motion prediction/compensation unit 122 uses the filter coefficient from the adaptive interpolation filter setting unit 123, motion vector information, and the integer pixel precision reference image pixel values obtained from the frame memory 119 to generate the pixel values of the prediction image. The generated prediction image pixel values are supplied to the computing unit 115 via the switch 125.

Of the information obtained by decoding the header information, the adaptive interpolation filter setting unit 123 is supplied from the lossless decoding unit 112 with the filter coefficients for the adaptive interpolation filter for large block sizes and small block sizes. In accordance with a control signal from the block determining unit 124, the adaptive interpolation filter setting unit 123 supplies one or the other of filter coefficients for large block sizes and small block sizes to the motion prediction/compensation unit 122.

The block detecting unit 124 supplies a control signal for selecting a filter coefficient for large block sizes or small block sizes to the adaptive interpolation filter setting unit 123, in accordance with the block size indicated in the inter prediction mode information supplied to the motion prediction/compensation unit 122.

In other words, the block determining unit 124 classifies blocks indicated in the inter prediction mode information into a class of block sizes greater than $8 \times 8$ and a class of block sizes $8 \times 8$ and smaller, and supplies control signals for selecting a filter coefficient corresponding to the class.

The switch 125 selects the prediction image generated by the motion prediction/compensation unit 122 or intra prediction unit 121 and supplies this to the computing unit 115.

Note that with the image encoding device 51 in Fig. 3, calculation of filter coefficients for adaptive interpolation filters is performed within the device. In contrast with this, at the image decoding device 101, filter coefficients which are encoded and sent thereto are switched between in accordance with block size for motion compensation and thus used.

[Configuration Example of Motion Prediction/Compensation Unit and Adaptive Interpolation Filter Setting Unit]

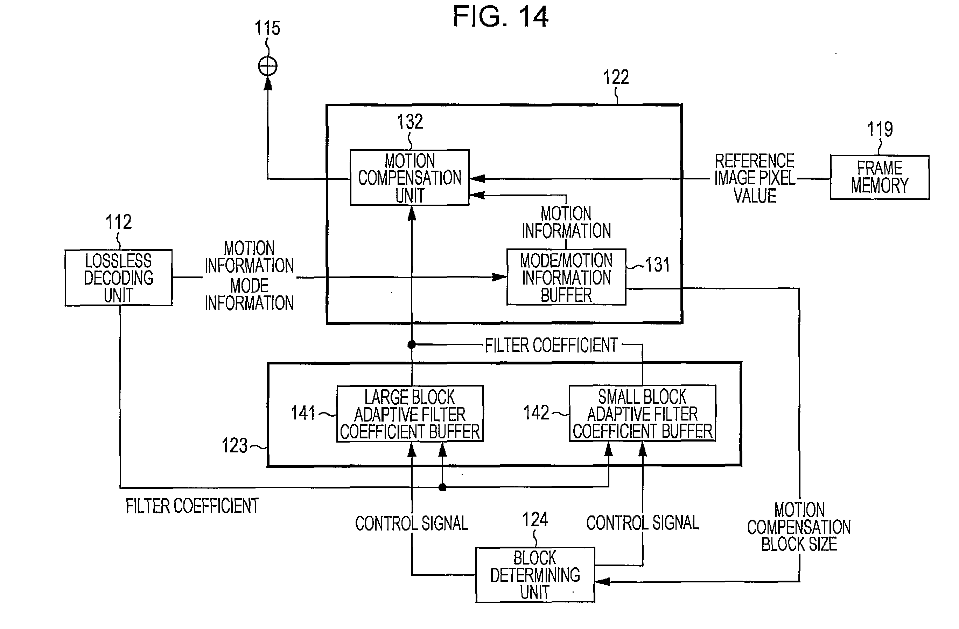

Fig. 14 is a block diagram illustrating a detailed configuration example of the motion prediction/compensation unit 122 and adaptive interpolation filter setting unit 123. Note that in Fig. 14, the switches 120 and 125 in Fig. 13 are omitted.

With the example in Fig. 14, the motion prediction/compensation unit 122 is configured of a mode/motion information buffer 131 and a motion compensation unit 132.

The adaptive interpolation filter setting unit 123 is configured of a large block adaptive filter coefficient buffer 141 and a small block adaptive filter coefficient buffer 142.

The mode/motion information buffer 131 stores inter prediction mode information for each macroblock from the lossless decoding unit 112, and motion vector information for the current block.

The motion compensation unit 132 reads out the motion vector information and corresponding inter prediction mode information from the mode/motion information buffer 131, and generates pixel values of a prediction image for the current block to be subjected to decoding processing, using reference image pixel values obtained from the frame memory 119. At this time, the motion compensation unit 132 uses a filter coefficient from the large block adaptive filter coefficient buffer 141 or the small block adaptive filter coefficient buffer 142 as a coefficient for the adaptive interpolation filter. The generated prediction image pixel values are supplied to the computing unit 115 via the switch 125.

The large block adaptive filter coefficient buffer 141 stores filter coefficients for large block sizes for each slice from the lossless decoding unit 112. The small block adaptive filter coefficient buffer 142 stores filter coefficients for small block sizes for each slice from the lossless decoding unit 112.

A control signal corresponding to the block size for motion compensation is supplied from the block determining unit 124 to one or the other of the large block adaptive filter coefficient buffer 141 and small block adaptive filter coefficient buffer 142.

The filter coefficients for large block sizes stored in the large block adaptive filter coefficient buffer 141 are read out in accordance with control signals from the block determining unit 124 and supplied to the motion compensation unit 132. The filter coefficients for small block sizes stored in the small block adaptive filter coefficient buffer 142 are read out in accordance with control signals from the block determining unit 124 and supplied to the motion compensation unit 132.

[Description of Decoding Processing of Image Decoding Device]

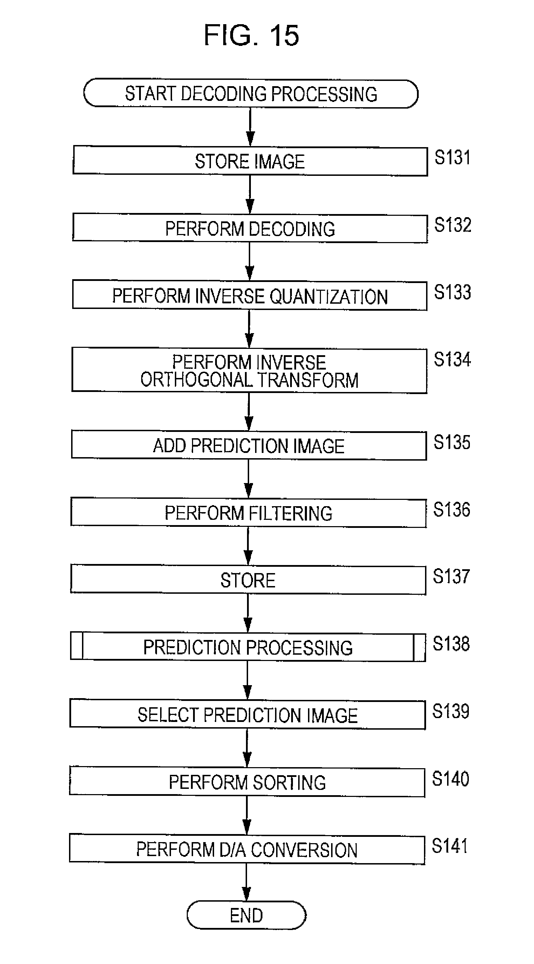

Next, the decoding processing that the image decoding device 101 executes will be described with reference to the flowchart in Fig. 15.

In step S131, the storage buffer 111 stores the transmitted image. In step S132, the lossless decoding unit 112 decodes the compressed image supplied from the storage buffer 111. Specifically, the I picture, P picture, and B picture encoded by the lossless encoding unit 66 in Fig. 3 are decoded.

At this time, the motion vector information, reference frame information, prediction mode information (information indicating the intra prediction mode or inter prediction mode), filter coefficients of the adaptive interpolation filter, and so forth are also decoded.

Specifically, in the event that the prediction mode information is intra prediction mode information, the prediction mode information is supplied to the intra prediction unit 121. In the event that the prediction mode information is inter prediction mode information, the difference motion vector information and reference frame information corresponding to the prediction mode information are supplied to the motion prediction/compensation unit 122. Also, the filter coefficients are supplied to the adaptive interpolation filter setting unit 123 for each slice.

In step S133, the inverse quantization unit 113 inversely quantizes the transform coefficient decoded by the lossless decoding unit 112 using a property corresponding to the property of the quantization unit 65 in Fig. 3. In step S134, the inverse orthogonal transform unit 114 subjects the transform coefficient inversely quantized by the inverse quantization unit 113 to inverse orthogonal transform using a property corresponding to the property of the orthogonal transform unit 64 in Fig. 3. Thus, difference information corresponding to the input of the orthogonal transform unit 64 in Fig. 3 (the output of the computing unit 63) has been decoded.

In step S135, the computing unit 115 adds the prediction image selected in the processing in later-described step S141 and input via the switch 125, to the difference information. Thus, the original image is decoded. In step S136, the deblocking filter 116 subjects the image output from the computing unit 115 to filtering. Thus, block distortion is removed. In step S137, the frame memory 119 stores the filtered image.

In step S138, the intra prediction unit 121 or motion prediction/compensation unit 122 performs the corresponding image prediction processing in response to the prediction mode information supplied from the lossless decoding unit 112.

That is, in the event that the intra prediction mode information has been supplied from the lossless decoding unit 112, the intra prediction unit 121 performs the intra prediction processing in the intra prediction mode. In the event that the inter prediction mode information has been supplied from the lossless decoding unit 112, the motion prediction/compensation unit 122 performs the motion prediction and compensation processing in the inter prediction mode. At this time, the motion prediction/compensation unit 122 generates prediction image pixel values of the current block, using the filter coefficient set at the adaptive interpolation filter setting unit 123, the motion vector information, and the integer pixel precision reference image pixel values obtained from the frame memory 119.

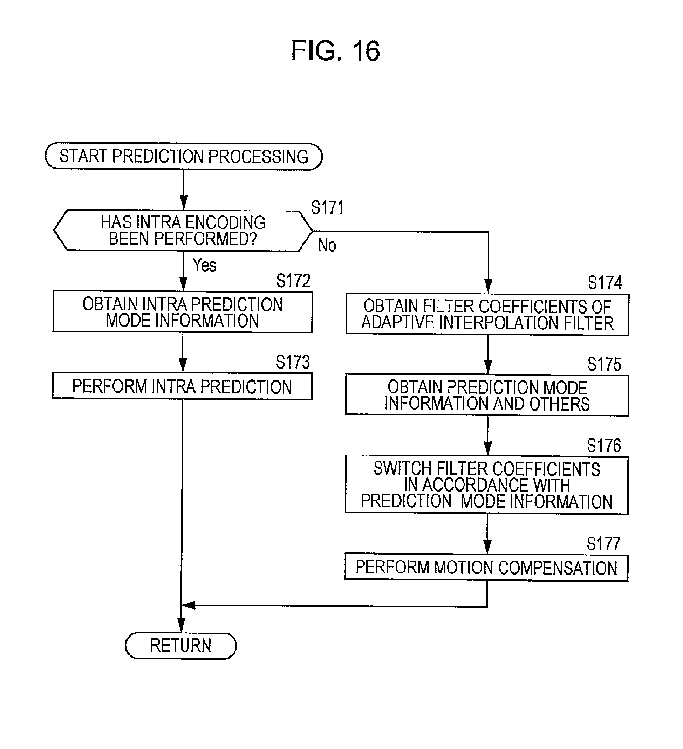

While the details of the prediction processing in step S138 will be described later with reference to Fig. 16, according to this processing, the prediction image generated by the intra prediction unit 121 or the prediction image generated by the motion prediction/compensation unit 122 is supplied to the switch 125.

In step S139, the switch 125 selects the prediction image. Specifically, the prediction image generated by the intra prediction unit 121 or the prediction image generated by the motion prediction/compensation unit 122 is supplied. Accordingly, the supplied prediction image is selected, supplied to the computing unit 115, and in step S134, as described above, added to the output of the inverse orthogonal transform unit 114.

In step S140, the screen rearranging buffer 117 performs rearranging. Specifically, the sequence of frames rearranged for encoding by the screen rearranging buffer 62 of the image encoding device 51 is rearranged to the original display sequence.

In step S141, the D/A conversion unit 118 performs D/A conversion of the image from the screen rearranging buffer 117. This image is output to an unshown display, and the image is displayed.

[Description of Prediction Processing of Image Decoding Device]

Next, the prediction processing in step S138 in Fig. 15 will be described with reference to the flowchart in Fig. 16.

In step S171, the intra prediction unit 121 determines whether or not the current block has been subjected to intra encoding. Upon the intra prediction mode information being supplied from the lossless decoding unit 112 to the intra prediction unit 121, in step S171 the intra prediction unit 121 determines that the current block has been subjected to intra encoding, and the processing proceeds to step S172.

In step S172, the intra prediction unit 121 obtains the intra prediction mode information, and in step S173 performs intra prediction.

That is to say, in the event that the image to be processed is an image to be subjected to intra processing, the necessary image is read out from the frame memory 119, and supplied to the intra prediction unit 121 via the switch 120. In step S173, the intra prediction unit 121 performs intra prediction in accordance with the intra prediction mode information obtained in step S172 to generate a prediction image. The generated prediction image is output to the switch 125.

On the other hand, in the event that determination is made in step S171 that intra encoding has not been performed, the processing proceeds to step S174.

In the event that the image to be processed is an image to be subjected to inter processing, the motion prediction/compensation unit 122 is supplied with the inter prediction mode information, reference frame information, and motion vector information, from the lossless decoding unit 112. Also, the filter coefficients for the adaptive interpolation filter are supplied from the adaptive interpolation filter setting unit 123.

In step S174, the adaptive interpolation filter setting unit 123 obtains the filter coefficients for the adaptive interpolation filter. Of the obtained filter coefficients, large block size filter coefficients are stored in the large block adaptive filter coefficient buffer 141. Of the obtained filter coefficients, small block size filter coefficients are stored in the small block adaptive filter coefficient buffer 142.

In step S175, the motion prediction/compensation unit 122 obtains the prediction mode information and so forth from the lossless decoding unit 112. That is to say, the inter prediction mode information, reference frame information, and motion vector information, are obtained. The obtained motion vector information and inter prediction mode information are stored in the mode/motion information buffer 131.

In step S176, the block determining unit 124 switches between large block size filter coefficients and small block size filter coefficients in accordance with the inter prediction mode information stored in the mode/motion information buffer 131.

That is to say, the block determining unit 124 supplies control signals for selecting filter coefficients for large block sizes or small block sizes to the adaptive interpolation filter setting unit 123, in accordance with the block size indicated in the inter prediction mode information supplied to the motion prediction/compensation unit 122.

A large block size filter coefficient stored in the large block adaptive filter coefficient buffer 141 is read out in accordance with a control signal from the block determining unit 124 and supplied to the motion compensation unit 132. Alternatively, a small block size filter coefficient stored in the small block adaptive filter coefficient buffer 142 is read out in accordance with a control signal from the block determining unit 124 and supplied to the motion compensation unit 132.

In step S177, the motion compensation unit 132 performs motion compensation using the filter coefficient switched in step S176. That is to say, the motion compensation unit 132 generates pixel values for a prediction image for the current block with a filter coefficient that has been switched using the motion vector information from the mode/motion information buffer 131, inter prediction mode information, and preference image pixel values from the frame memory 119. The generated prediction image is output to the switch 125.

Thus, with the image encoding device 51, classification is performed in the slice into a class of large block sizes and a class of small block sizes, and filter coefficient values for an adaptive interpolation filter are calculated for each classified class. That is to say, at the image encoding device 51, filter coefficient values which are optimal corresponding to local natures in the frame can be calculated.

Also, at the image decoding device 101, of the filter coefficient values sent thereto, filter coefficient values corresponding to the block size (class) are set and used. That is to say, at with the image decoding device 101, filter coefficient values which are optimal corresponding to local natures in the frame can be set.

Accordingly, motion prediction and compensation corresponding to local natures in the frame can be performed. As a result, encoding efficiency can be improved.

Note that while in the above description, classification is performed depending on whether the block sizes is greater than an $8 \times 8$ pixel block, or equal or smaller, and filter coefficients are calculated and switching is performed, but is not restricted to this. That is to say, classification may be performed into classes with a block other than a $8 \times 8$ block as a reference, and classification may be made into three or more types of classes.

For example, in a case of the number of classification classes being three, the prediction efficiency is better than with the case of two, but more coefficients are transmitted. On the other hand, in a case of the number of classification classes being two, fewer coefficients are transmitted, but prediction efficiency is lower as compared to the case of three.

Also, in the case of a P picture, the number of bits to be transmitted is great to begin with, so effects of increased number of coefficients to be transmitted are small, but in the case of a B picture, the number of bits to be transmitted is small to begin with, so effects of increased number of coefficients to be transmitted are great. Accordingly, an arrangement may be made wherein the number of classified classes are switched in accordance with the picture type for example (e.g., classification into two classes and classification into three classes), such as having classification into three classes for P pictures and classification into two classes for B pictures.

Also, while the size of macroblocks has been described with regard to the case of $16 \times 16$ pixels in the above description, the present invention can also be applied to extended macroblock sizes as described in the above-described NPL 4.

[Description of Application to Extended Macroblock Sizes]

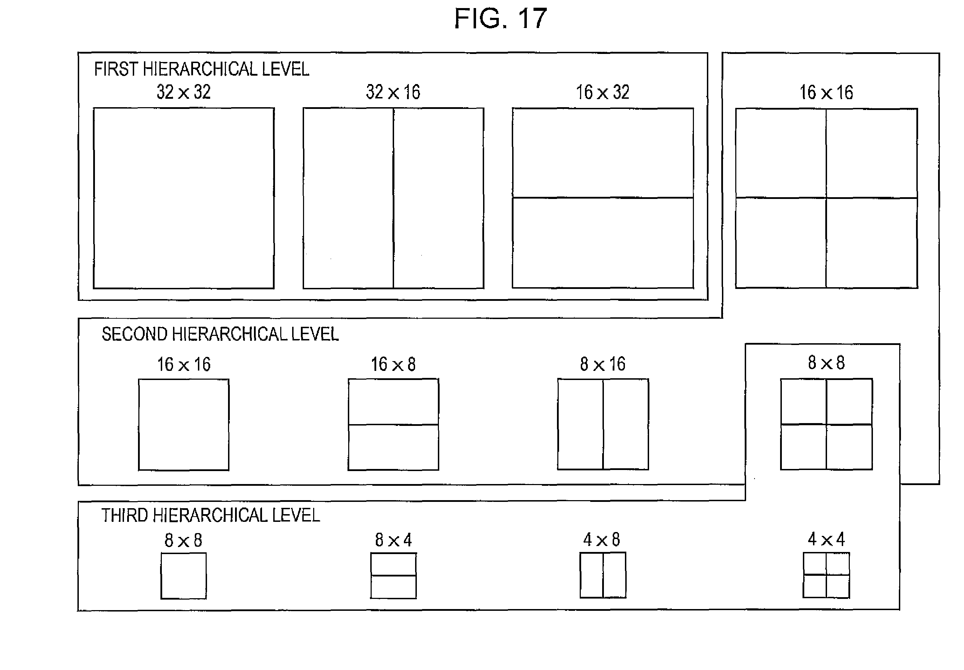

Fig. 17 is a diagram illustrating an example of an extended macroblock size proposed in NPL 4. With NPL 4, the macroblock size is extended to $32 \times 32$ pixels.

Macroblocks made up of $32 \times 32$ pixels divided into blocks (partitions) of $32 \times 32$ pixels, $32 \times 16$ pixels, $16 \times 32$ pixels, and $16 \times 16$ pixels are shown from the left in order on the upper tier in Fig. 17. Blocks made up of $16 \times 16$ pixels divided into blocks of $16 \times 16$ pixels, $16 \times 8$ pixels, $8 \times 16$ pixels, and $8 \times 8$ pixels are shown from the left in order on the middle tier in Fig. 17. Also, blocks made up of $8 \times 8$ pixels divided into blocks of $8 \times 8$ pixels, $8 \times 4$ pixels, $4 \times 8$ pixels, and $4 \times 4$ pixels are shown from the left in order on the lower tier in Fig. 17.

In other words, the macroblocks of $32 \times 32$ pixels may be processed as blocks of $32 \times 32$ pixels, $32 \times 16$

pixels, 16 × 32 pixels, and 16 × 16 pixels shown on the upper tier in Fig. 17.

Also, the blocks of 16 × 16 pixels shown on the right side on the upper tier may be processed as blocks of 16 × 16 pixels, 16 × 8 pixels, 8 × 16 pixels, and 8 × 8 pixels shown on the middle tier in the same way as with the H. 264/AVC format.

The blocks of 8 × 8 pixels shown on the right side on the middle tier may be processed with blocks of 8 × 8 pixels, 8 × 4 pixels, 4 × 8 pixels, and 4 × 4 pixels shown on the lower tier in the same way as with the H.264/AVC format.

These blocks can be classified into the following three hierarchical levels. That is to say, the blocks of 32 × 32 pixels, 32 × 16 pixels, and 16 × 32 pixels shown at the upper tier in Fig. 17 will be referred to as a first hierarchical level. The block of 16 × 16 pixels at the right hand of the upper tier, and the blocks of 16 × 16 pixels, 16 × 8 pixels, and 8 × 16 pixels, at the middle tier, will be referred to as a second hierarchical level. The block of 8 × 8 pixels at the right hand of the middle tier, and the blocks of 8 × 8 pixels, 8 × 4 pixels, 4 × 8 pixels, and 4 × 4 pixels, at the bottom tier, will be referred to as a third hierarchical level.

By employing such a hierarchical structure, with the proposal in NPL 1, regarding a 16 × 16 pixel block or less, a greater block is defined as a superset thereof while maintaining compatibility with the H.264/AVC format.

As for a method how to apply the present invention to extended macroblock sizes proposed as described above, there is a method wherein, for example, in the current slice, adaptive filter coefficients are calculated for each hierarchical level, and the filter coefficients calculated for each hierarchical level are added to the compressed image and transmitted to the decoding side. That is to say, this is a method where classification is performed into classes at each hierarchical level in the current slice. An arrangement may be made where, at this time, flag information relating to whether a filter coefficients is to be sent or not sent for each hierarchical level (class) is added to the compressed image and transmitted to the decoding side.

In the event that flag information is not transmitted to the decoding side and is not received at the decoding side, an interpolation filter is set by one of the following methods.

That is to say, as a first method, in the event that flag information is not received, a 6-tap FIR filter stipulated in the H.264/AVC format is set for the interpolation filter to be used.

As a second method, in a case where a filter coefficient corresponding to the first hierarchical level is received but no filter coefficient corresponding to the second hierarchical level is received, for example, the filter coefficient corresponding to the first hierarchical level which is a hierarchical level with greater block sizes than the second hierarchical level is set for the second hierarchical level as well.

By applying this second method, the same filter coefficient can be used for the first hierarchical level and second hierarchical level, and a difference filter coefficient used for the third hierarchical level, for example.

For the third method, in a case where no filter coefficient corresponding to the current hierarchical level is received in the current slice, there is a method where a filter coefficient corresponding to the same hierarchical level in a slice one before or one after the current slice is used for the current hierarchical level in the current slice.

In the example in Fig. 17, macroblocks regarding which encoding is performed using relatively large block sizes such as with the first hierarchical level and second hierarchical level do not include relatively high-frequency components. In comparison, macroblocks regarding which encoding is performed using relatively small block sizes such as with the third hierarchical level are thought to include high-frequency components to a certain extent.

Accordingly, at the time of performing encoding using extended macroblocks such as shown in Fig. 17, filter coefficients are calculated individually in accordance with the hierarchical levels with difference block sizes. Accordingly, improvement in encoding capabilities suitable for local natures which the image has can be realized.

Note that the number of taps of the filter may be different for each hierarchical level as well.

That is to say, an arrangement may be made wherein a 4-tap filter is applied to the first hierarchical level and second hierarchical level thought to not include relatively high frequency components, and a 6-tap filter is applied to the third hierarchical level including relatively high frequency components.

Further, a filter may be used with a different number of taps for P pictures and B pictures.

Also, filter classification according to block sizes described above may be applied to slice types as well.

That is to say, for P slices which have a relatively great amount of code generated in an inter slice, even if two types of filter coefficients in accordance with block size are had, the overhead information thereof is relatively small.

On the other hand, regarding B slices, the amount of code generated is relatively small, if two types of filter coefficients are had, the overhead information thereof may deteriorate encoding efficiency. In such a case, an arrangement may be made where filter classification according to the present invention is applied to P slices but not applied to B slices.

Note that the above-described application methods regarding extended macroblock sizes can be applied to a case of being based on the H.264/AVC format described with reference to Fig. 3 through Fig. 16 above.

Description has been made so far based on the H.264/AVC format for an encoding format, but the present invention is not restricted to this, and another encoding format / decoding format may be applied which performs motion compensation using an adaptive interpolation filter.

Note that the present invention may be applied to an image encoding device and an image decoding device used at the time of receiving image information (bit streams) compressed by orthogonal transform such as discrete cosine transform or the like and motion compensation via a network medium such as satellite broadcasting, a cable television, the Internet, a cellular phone, or the like, for example, as with MPEG, H.26x, or the like. Also, the present invention may be applied to an image encoding device and an image decoding device used at the time of processing image information on storage media such as an optical disc, a magnetic disk, and flash memory. Further, the present invention may be applied to a motion prediction compensation device included in such an image encoding device and an image decoding device and so forth.

The above-described series of processing may be executed by hardware, or may be executed by software. In the event of executing the series of processing by software, a program making up the software thereof is installed in a computer. Here, examples of the computer include a computer built into dedicated hardware, and a general-purpose personal computer whereby various functions can be executed by various types of programs being installed thereto.

[Configuration Example of Personal Computer]

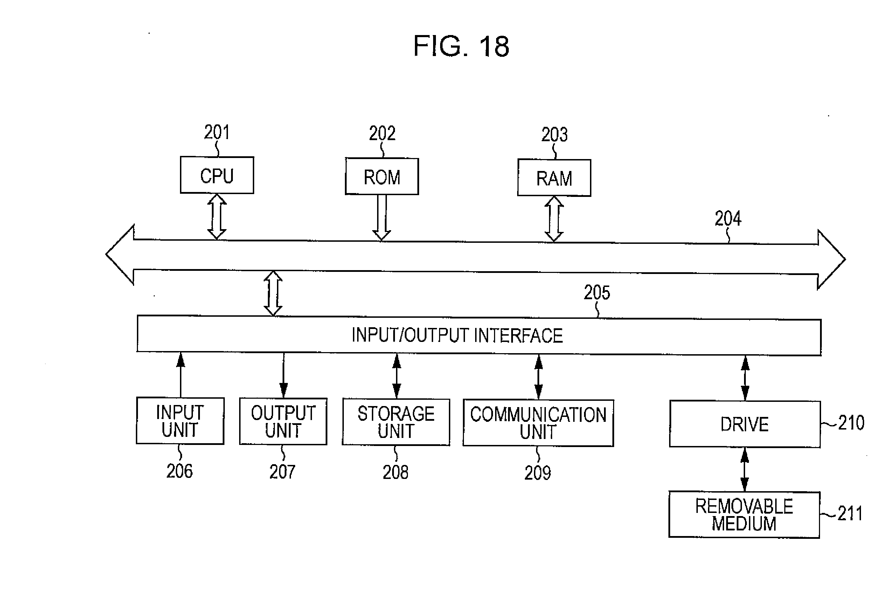

Fig. 18 is a block diagram illustrating a configuration example of the hardware of a computer which executes the above-described series of processing using a program.

With the computer, a CPU (Central Processing Unit) 201, ROM (Read Only Memory) 202, and RAM (Random Access Memory) 203 are mutually connected by a bus 204.

Further, an input/output interface 205 is connected to the bus 204. An input unit 206, an output unit 207, a storage unit 208, a communication unit 209, and a drive 210 are connected to the input/output interface 205.

The input unit 206 is made up of a keyboard, a mouse, a microphone, and so forth. The output unit 207 is made up of a display, a speaker, and so forth. The storage unit 208 is made up of a hard disk, nonvolatile memory, and so forth. The communication unit 209 is made up of a network interface and so forth. The drive 210 drives a removable medium 311 such as a magnetic disk, an optical disc, a magneto-optical disk, semiconductor memory, or the like.

With the computer thus configured, for example, the CPU 201 loads a program stored in the storage unit 208 to the RAM 203 via the input/output interface 205 and bus 204, and executes the program, and accordingly, the above-described series of processing is performed.

The program that the computer (CPU 201) executes may be provided by being recorded in the removable medium 211 serving as a package medium or the like, for example. Also, the program may be provided via a cable or wireless transmission medium such as a local area network, the Internet, or digital broadcasting.

With the computer, the program may be installed in the storage unit 208 via the input/output interface 205 by mounting the removable medium 211 on the drive 210. Also, the program may be received by the communication unit 209 via a cable or wireless transmission medium, and installed in the storage unit 208. Additionally, the program may be installed in the ROM 202 or storage unit 208 beforehand.

Note that the program that the computer executes may be a program wherein the processing is performed in the time sequence along the sequence described in the present Specification, or may be a program wherein the processing is performed in parallel or at necessary timing such as when call-up is performed.

The embodiments of the present invention are not restricted to the above-described embodiment, and various modifications may be made without departing from the essence of the present invention.

For example, the above-described image encoding device 51 and image decoding device 101 may be applied to an optional electronic device. Hereafter, an example thereof will be described.

[Configuration Example of Television Receiver]

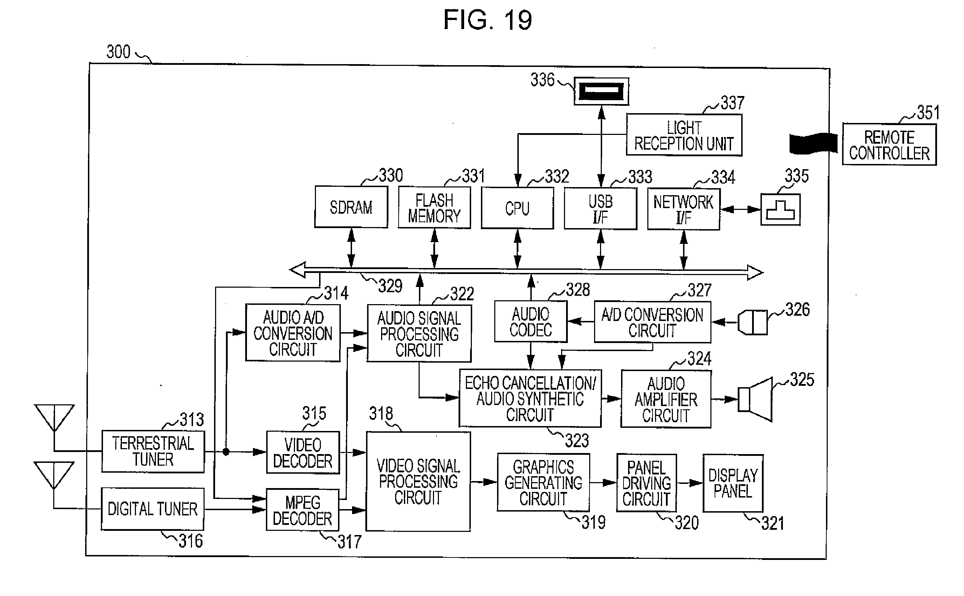

Fig. 19 is a block diagram illustrating a principal configuration example of a television receiver using the image decoding device to which the present invention has been applied.

A television receiver 300 shown in Fig. 19 includes a terrestrial tuner 313, a video decoder 315, a video signal processing circuit 318, a graphics generating circuit 319, a panel driving circuit 320, and a display panel 321.

The terrestrial tuner 313 receives the broadcast wave signals of a terrestrial analog broadcast via an antenna, demodulates, obtains video signals, and supplies these to the video decoder 315. The video decoder 315 subjects the video signals supplied from the terrestrial tuner 313 to decoding processing, and supplies the obtained digital component signals to the video signal processing circuit 318.

The video signal processing circuit 318 subjects the video data supplied from the video decoder 315 to predetermined processing such as noise removal or the like, and supplies the obtained video data to the graphics generating circuit 319.

The graphics generating circuit 319 generates the video data of a program to be displayed on a display panel 321, or image data due to processing based on an application to be supplied via a network, or the like, and supplies the generated video data or image data to the panel driving circuit 320. Also, the graphics generating circuit 319 also performs processing such as supplying video data obtained by generating video data (graphics) for the user displaying a screen used for selection of an item or the like, and superimposing this on the video data of a program, to the panel driving circuit 320 as appropriate.

The panel driving circuit 320 drives the display panel 321 based on the data supplied from the graphics generating circuit 319 to display the video of a program, or the above-described various screens on the display panel 321.

The display panel 321 is made up of an LCD (Liquid Crystal Display) and so forth, and displays the video of a program or the like in accordance with the control by the panel driving circuit 320.

Also, the television receiver 300 also includes an audio A/D (Analog/Digital) conversion circuit 314, an audio signal processing circuit 322, an echo cancellation/audio synthesizing circuit 323, an audio amplifier circuit 324, and a speaker 325.

The terrestrial tuner 313 demodulates the received broadcast wave signal, thereby obtaining not only a video signal but also an audio signal. The terrestrial tuner 313 supplies the obtained audio signal to the audio A/D conversion circuit 314.

The audio A/D conversion circuit 314 subjects the audio signal supplied from the terrestrial tuner 313 to A/D conversion processing, and supplies the obtained digital audio signal to the audio signal processing circuit 322.

The audio signal processing circuit 322 subjects the audio data supplied from the audio A/D conversion circuit 314 to predetermined processing such as noise removal or the like, and supplies the obtained audio data to the echo cancellation/audio synthesizing circuit 323.

The echo cancellation/audio synthesizing circuit 323 supplies the audio data supplied from the audio signal processing circuit 322 to the audio amplifier circuit 324.

The audio amplifier circuit 324 subjects the audio data supplied from the echo cancellation/audio synthesizing circuit 323 to D/A conversion processing, subjects to amplifier processing to adjust to predetermined volume, and then outputs the audio from the speaker 325.

Further, the television receiver 300 also includes a digital tuner 316, and an MPEG decoder 317.

The digital tuner 316 receives the broadcast wave signals of a digital broadcast (terrestrial digital broadcast, BS (Broadcasting Satellite)/CS (Communications Satellite) digital broadcast) via the antenna, demodulates to obtain MPEG-TS (Moving Picture Experts Group-Transport Stream), and supplies this to the MPEG decoder 317.

The MPEG decoder 317 descrambles the scrambling given to the MPEG-TS supplied from the digital tuner 316, and extracts a stream including the data of a program serving as a playback object (viewing object). The MPEG decoder 317 decodes an audio packet making up the extracted stream, supplies the obtained audio data to the audio signal processing circuit 322, and also decodes a video packet making up the stream, and supplies the obtained video data to the video signal processing circuit 318. Also, the MPEG decoder 317 supplies EPG (Electronic Program Guide) data extracted from the MPEG-TS to a CPU 332 via an unshown path.

The television receiver 300 uses the above-described image decoding device 101 as the MPEG decoder 317 for decoding video packets in this way. Accordingly, in the same way as with the case of the image decoding device 101, of the filter coefficient values of the adaptive interpolation filter sent thereto, filter coefficient values corresponding to the block size (class) are set and used. Accordingly, motion prediction and compensation corresponding to local natures in the frame can be performed.

The video data supplied from the MPEG decoder 317 is, in the same way as with the case of the video data supplied from the video decoder 315, subjected to predetermined processing at the video signal processing circuit 318. The video data subjected to predetermined processing is then superimposed as appropriate on the generated video data and so forth at the graphics generating circuit 319, supplied to the display panel 321 via the panel driving circuit 320, and the image thereof is displayed thereon.

The audio data supplied from the MPEG decoder 317 is, in the same way as with the case of the audio data supplied from the audio A/D conversion circuit 314, subjected to predetermined processing at the audio signal processing circuit 322. The audio data subjected to predetermined processing is then supplied to the audio amplifier circuit 324 via the echo cancellation/audio synthesizing circuit 323, and subjected to D/A conversion processing and amplifier processing. As a result thereof, the audio adjusted in predetermined volume is output from the speaker 325.

Also, the television receiver 300 also includes a microphone 326, and an A/D conversion circuit 327.

The A/D conversion circuit 327 receives the user's audio signal collected by the microphone 326 provided to the television receiver 300 serving as for audio conversation. The A/D conversion circuit 327 subjects the received audio signal to A/D conversion processing, and supplies the obtained digital audio data to the echo cancellation/audio synthesizing circuit 323.

In the event that the user (user A)'s audio data of the television receiver 300 has been supplied from the A/D conversion circuit 327, the echo cancellation/audio synthesizing circuit 323 perform echo cancellation with the user A's audio data taken as a object. After echo cancellation, the echo cancellation/audio synthesizing circuit 323 outputs audio data obtained by synthesizing with other audio data and so forth, from the speaker 325 via the audio amplifier circuit 324.

Further, the television receiver 300 also includes an audio codec 328, an internal bus 329, SDRAM (Synchronous Dynamic Random Access Memory) 330, flash memory 331, a CPU 332, a USB (Universal Serial Bus) I/F 333, and a network I/F 334.

The A/D conversion circuit 327 receives the user's audio signal collected by the microphone 326 provided to the television receiver 300 serving as for audio conversation. The A/D conversion circuit 327 subjects the received audio signal to A/D conversion processing, and supplies the obtained digital audio data to the audio codec 328.

The audio codec 328 converts the audio data supplied from the A/D conversion circuit 327 into the data of a predetermined format for transmission via a network, and supplies to the network I/F 334 via the internal bus 329.

The network I/F 334 is connected to the network via a cable mounted on a network terminal 335. The network I/F 334 transmits the audio data supplied from the audio codec 328 to another device connected to the network thereof, for example. Also, the network I/F 334 receives, via the network terminal 335, the audio data transmitted from another device connected thereto via the network for example, and supplies this to the audio codec 328 via the internal bus 329.

The audio codec 328 converts the audio data supplied from the network I/F 334 into the data of a predetermined format, and supplies this to the echo cancellation/audio synthesizing circuit 323.

The echo cancellation/audio synthesizing circuit 323 performs echo cancellation with the audio data supplied from the audio codec 328 taken as a object, and outputs the data of audio obtained by synthesizing with other audio data and so forth, from the speaker 325 via the audio amplifier circuit 324.

The SDRAM 330 stores various types of data necessary for the CPU 332 performing processing.

The flash memory 331 stores a program to be executed by the CPU 332. The program stored in the flash memory 331 is read out by the CPU 332 at predetermined timing such as when activating the television receiver 300, or the like. EPG data obtained via a digital broadcast, data obtained from a predetermined server via the network, and so forth are also stored in the flash memory 331.

For example, MPEG-TS including the content data obtained from a predetermined server via the network by the control of the CPU 332 is stored in the flash memory 331. The flash memory 331 supplies the MPEG-TS thereof to the MPEG decoder 317 via the internal bus 329 by the control of the CPU 332, for example.

The MPEG decoder 317 processes the MPEG-TS thereof in the same way as with the case of the MPEG-TS supplied from the digital tuner 316. In this way, the television receiver 300 receives the content data made up of video, audio, and so forth via the network, decodes using the MPEG decoder 317, whereby video thereof can be displayed, and audio thereof can be output.

Also, the television receiver 300 also includes a light reception unit 337 for receiving the infrared signal transmitted from a remote controller 351.

The light reception unit 337 receives infrared rays from the remote controller 351, and outputs a control code representing the content of the user's operation obtained by demodulation, to the CPU 332.

The CPU 332 executes the program stored in the flash memory 331 to control the entire operation of the television receiver 300 according to the control code supplied from the light reception unit 337, and so forth. The CPU 332, and the units of the television receiver 300 are connected via an unshown path.

The USB I/F 333 performs transmission/reception of data as to an external device of the television receiver 300 which is connected via a USB cable mounted on a USB terminal 336. The network I/F 334 connects to the network via a cable mounted on the network terminal 335, also performs transmission/reception of data other than audio data as to various devices connected to the network.

The television receiver 300 uses the image decoding device 101 as the MPEG decoder 317, whereby local natures in the frame can be handled, and accordingly encoding efficiency can be improved. As a result thereof, the television receiver 300 can more speedily obtain a decoded image with higher definition from broadcast wave signals received via the antenna, or the content data obtained via the network, and display this.

[Configuration Example of Cellular Phone]

Fig. 31 is a block diagram illustrating a principal configuration example of a cellular phone using the image encoding device and image decoding device to which the present invention has been applied.

A cellular phone 400 shown in Fig. 31 includes a main control unit 450 configured so as to integrally control the units, a power supply circuit unit 451, an operation input control unit 452, an image encoder 453, a camera I/F unit 454, an LCD control unit 455, an image decoder 456, a multiplexing/separating unit 457, a recording/playback unit 462, a modulation/demodulation circuit unit 458, and an audio codec 459. These are mutually connected via a bus 460.

Also, the cellular phone 400 includes operation keys 419, a CCD (Charge Coupled Devices) camera 416, a liquid crystal display 418, a storage unit 423, a transmission/reception circuit unit 463, an antenna 414, a microphone (MIC) 421, and a speaker 417.

Upon a call being ended and a power key being turned on by the user's operation, the power supply circuit unit 451 activates the cellular phone 400 in an operational state by supplying power to the units from a battery pack.

The cellular phone 400 performs various operations such as transmission/reception of an audio signal, transmission/reception of an e-mail and image data, image shooting, data recoding, and so forth, in various modes such as a voice call mode, a data communication mode, and so forth, under control of a main control unit 450 made up of a CPU, ROM, RAM, and so forth.

For example, in the voice call mode, the cellular phone 400 converts the audio signal collected by the microphone (MIC) 421 into digital audio data by the audio codec 459, subjects this to spectrum spread processing at the modulation/demodulation circuit unit 458, subjects this to digital/analog conversion processing and frequency conversion processing at the transmission/reception circuit unit 463. The cellular phone 400 transmits the signal for transmission obtained by the conversion processing thereof to an unshown base station via the antenna 414. The signal for transmission (audio signal) transmitted to the base station is supplied to the communication partner's cellular phone via the public telephone network.

Also, for example, in the voice call mode, the cellular phone 400 amplifies the reception signal received at the antenna 414, at the transmission/reception circuit unit 463, further subjects to frequency conversion processing and analog/digital conversion processing, subjects to spectrum inverse spread processing at the modulation/demodulation circuit unit 458, and converts into an analog audio signal by the audio codec 459. The cellular phone 400 outputs the converted and obtained analog audio signal thereof from the speaker 417.

Further, for example, in the event of transmitting an e-mail in the data communication mode, the cellular phone 400 accepts the text data of the e-mail input by the operation of the operation keys 419 at the operation input control unit 452. The cellular phone 400 processes the text data thereof at the main control unit 450, and displays on the liquid crystal display 418 via the LCD control unit 455 as an image.

Also, the cellular phone 400 generates e-mail data at the main control unit 450 based on the text data accepted by the operation input control unit 452, the user's instructions, and so forth. The cellular phone 400 subjects the e-mail data thereof to spectrum spread processing at the modulation/demodulation circuit unit 458, and subjects to digital/analog conversion processing and frequency conversion processing at the transmission/reception circuit unit 463. The cellular phone 400 transmits the signal for transmission obtained by the conversion processing thereof to an unshown base station via the antenna 414. The signal for transmission (e-mail) transmitted to the base station is supplied to a predetermined destination via the network, mail server, and so forth.

Also, for example, in the event of receiving an e-mail in the data communication mode, the cellular phone 400 receives the signal transmitted from the base station via the antenna 414 with the transmission/reception circuit unit 463, amplifies, and further subjects to frequency conversion processing and analog/digital conversion processing. The cellular phone 400 subjects the reception signal thereof to spectrum inverse spread processing at the modulation/demodulation circuit unit 458 to restore the original e-mail data. The cellular phone 400 displays the restored e-mail data on the liquid crystal display 418 via the LCD control unit 455.

Note that the cellular phone 400 may record (store) the received e-mail data in the storage unit 423 via the recording/playback unit 462.

This storage unit 423 is an optional rewritable storage medium. The storage unit 423 may be, for example, semiconductor memory such as RAM, built-in flash memory, or the like, may be a hard disk, or may be a removable medium such as a magnetic disk, a magneto-optical disk, an optical disc, USB memory, a memory card, or the like. It goes without saying that the storage unit 423 may be other than these.

Further, for example, in the event of transmitting image data in the data communication mode, the cellular phone 400 generates image data by imaging at the CCD camera 416. The CCD camera 416 includes a CCD serving as an optical device such as a lens, diaphragm, and so forth, and serving as a photoelectric device, which images a subject, converts the intensity of received light into an electrical signal, and generates the image data of an image of the subject. The image data thereof is subjected to compression encoding at the image encoder 453 using a predetermined encoding format, for example, such as MPEG2, MPEG4, or the like, via the camera I/F unit 454, and accordingly, the image data thereof is converted into encoded image data.

The cellular phone 400 employs the above-described image encoding device 51 as the image encoder 453 for performing such processing. Accordingly, in the same way as with the case of the image encoding device 51, the image encoder 453 classifies into a class of large block seizes and a class of small block sizes in the slice, and calculates filter coefficient values for the adaptive interpolation filter for each classified class. Accordingly, motion prediction and compensation corresponding to local natures in the frame can be performed.

Note that, at this time simultaneously, the cellular phone 400 converts the audio collected at the microphone (mike) 421 from analog to digital at the audio codec 459, and further encodes this during imaging by the CCD camera 416.

The cellular phone 400 multiplexes the encoded image data supplied from the image encoder 453, and the digital audio data supplied from the audio codec 459 at the multiplexing/separating unit 457 using a predetermined method. The cellular phone 400 subjects the multiplexed data obtained as a result thereof to spectrum spread processing at the modulation/demodulation circuit unit 458, and subjects to digital/analog conversion processing and frequency conversion processing at the transmission/reception circuit unit 463. The cellular phone 400 transmits the signal for transmission obtained by the conversion processing thereof to an unshown base station via the antenna 414. The signal for transmission (image data) transmitted to the base station is supplied to the communication partner via the network or the like.

Note that in the event that image data is not transmitted, the cellular phone 400 may also display the image data generated at the CCD camera 416 on the liquid crystal display 418 via the LCD control unit 455 instead of the image encoder 453.

Also, for example, in the event of receiving the data of a moving image file linked to a simple website or the like in the data communication mode, the cellular phone 400 receives the signal transmitted from the base station at the transmission/reception circuit unit 463 via the antenna 414, amplifies, and further subjects to frequency conversion processing and analog/digital conversion processing. The cellular phone 400 subjects the received signal to spectrum inverse spread processing at the modulation/demodulation circuit unit 458 to restore the original multiplexed data. The cellular phone 400 separates the multiplexed data thereof at the multiplexing/separating unit 457 into encoded image data and audio data.

The cellular phone 400 decodes the encoded image data at the image decoder 456 using the decoding format corresponding to a predetermined encoding format such as MPEG2, MPEG4, or the like, thereby generating playback moving image data, and displays this on the liquid crystal display 418 via the LCD control unit 455. Thus, moving image data included in a moving image file linked to a simple website is displayed on the liquid crystal display 418, for example.

The cellular phone 400 employs the above-described image decoding device 101 as the image decoder 456 for performing such processing. Accordingly, in the same way as with the image decoding device 101, of the filter coefficient values for the adaptive interpolation filter sent thereto, the image decoder 456 sets filter coefficient values corresponding to the block size (class). Accordingly, motion prediction and compensation corresponding to local natures in the frame can be performed.

At this time, simultaneously, the cellular phone 400 converts the digital audio data into an analog audio signal at the audio codec 459, and outputs this from the speaker 417. Thus, audio data included in a moving image file linked to a simple website is played, for example.

Note that, in the same way as with the case of e-mail, the cellular phone 400 may record (store) the received data liked to a simile website or the like in the storage unit 423 via the recording/playback unit 462.

Also, the cellular phone 400 analyzes the two-dimensional code obtained by being imaged by the CCD camera 416 at the main control unit 450, whereby information recorded in the two-dimensional code can be obtained.

Further, the cellular phone 400 can communicate with an external device at the infrared communication unit 481 using infrared rays.

The cellular phone 400 employs the image encoding device 51 as the image encoder 453, whereby local natures in the frame can be handled, so the encoding efficiency can be improved. As a result, the cellular phone 400 can provide encoded data (image data) with excellent encoding efficiency to another device.

Also, the cellular phone 400 employs the image decoding device 101 as the image decoder 456, whereby local natures in the frame can be handled, so encoding efficiency can be improved. As a result thereof, the cellular phone 400 can obtain a decoded image with higher definition from a moving image file linked to a simple website, and display this, for example.

Note that description has been made so far wherein the cellular phone 400 employs the CCD camera 416, but the cellular phone 400 may employ an image sensor (CMOS image sensor) using CMOS (Complementary Metal Oxide Semiconductor) instead of this CCD camera 416. In this case as well, the cellular phone 400 can image a subject and generate the image data of an image of the subject in the same way as with the case of employing the CCD camera 416.

Also, description has been made so far regarding the cellular phone 400, but the image encoding device 51 and image decoding device 101 may be applied to any kind of device in the same way as with the case of the cellular phone 400 as long as it is a device having the same imaging function and communication function as those of the cellular phone 400, for example, such as a PDA (Personal Digital Assistants), smart phone, UMPC (Ultra Mobile Personal Computers), net book, notebook-sized personal computer, or the like.

[Configuration Example of Hard Disk Recorder]

Fig. 32 is a block diagram illustrating a principal configuration example of a hard disk recorder which employs the image encoding device and image decoding device to which the present invention has been applied.

A hard disk recorder (HDD recorder) 500 shown in Fig. 32 is a device which stores, in a built-in hard disk, audio data and video data of a broadcast program included in broadcast wave signals (television signals) received by a tuner and transmitted from a satellite or a terrestrial antenna or the like, and provides the stored data to the user at timing according to the user's instructions.

The hard disk recorder 500 can extract audio data and video data from broadcast wave signals, decode these as appropriate, and store in the built-in hard disk, for example. Also, the hard disk recorder 500 can also obtain audio data and video data from another device via the network, decode these as appropriate, and store in the built-in hard disk, for example.

Further, the hard disk recorder 500 decodes audio data and video data recorded in the built-in hard disk, supplies to a monitor 560, and displays an image thereof on the screen of the monitor 560, for example. Also, the hard disk recorder 500 can output sound thereof from the speaker of the monitor 560.

The hard disk recorder 500 decodes audio data and video data extracted from the broadcast wave signals obtained via the tuner, or the audio data and video data obtained from another device via the network, supplies to the monitor 560, and displays an image thereof on the screen of the monitor 560, for example. Also, the hard disk recorder 500 can output sound thereof from the speaker of the monitor 560.

It goes without saying that operations other than these may be performed.

As shown in Fig. 32, the hard disk recorder 500 includes a reception unit 521, a demodulation unit 522, a demultiplexer 523, an audio decoder 524, a video decoder 525, and a recorder control unit 526. The hard disk recorder 500 further includes EPG data memory 527, program memory 528, work memory 529, a display converter 530, an OSD (On Screen Display) control unit 531, a display control unit 532, a recording/playback unit 533, a D/A converter 534, and a communication unit 535.

Also, the display converter 530 includes a video encoder 541. The recording/playback unit 533 includes an encoder 551 and a decoder 552.

The reception unit 521 receives the infrared signal from the remote controller (not shown), converts into an electrical signal, and outputs to the recorder control unit 526. The recorder control unit 526 is configured of, for example, a microprocessor and so forth, and executes various types of processing in accordance with the program stored in the program memory 528. At this time, the recorder control unit 526 uses the work memory 529 according to need.

The communication unit 535, which is connected to the network, performs communication processing with another device via the network. For example, the communication unit 535 is controlled by the recorder control unit 526 to communicate with a tuner (not shown), and to principally output a channel selection control signal to the tuner.

The demodulation unit 522 demodulates the signal supplied from the tuner, and outputs to the demultiplexer 523. The demultiplexer 523 separates the data supplied from the demodulation unit 522 into audio data, video data, and EPG data, and outputs to the audio decoder 524, video decoder 525, and recorder control unit 526, respectively.

The audio decoder 524 decodes the input audio data, for example, using the MPEG format, and outputs to the recording/playback unit 533. The video decoder 525 decodes the input video data, for example, using the MPEG format, and outputs to the display converter 530. The recorder control unit 526 supplies the input EPG data to the EPG data memory 527 for storing.

The display converter 530 encodes the video data supplied from the video decoder 525 or recorder control unit 526 into, for example, the video data conforming to the NTSC (National Television Standards Committee) format using the video encoder 541, and outputs to the recording/playback unit 533. Also, the display converter 530 converts the size of the screen of the video data supplied from the video decoder 525 or recorder control unit 526 into the size corresponding to the size of the monitor 560. The display converter 530 further converts the video data of which the screen size has been converted into the video data conforming to the NTSC format using the video encoder 541, converts into an analog signal, and outputs to the display control unit 532.

The display control unit 532 superimposes, under the control of the recorder control unit 526, the OSD signal output from the OSD (On Screen Display) control unit 531 on the video signal input from the display converter 530, and outputs to the display of the monitor 560 for display.

Also, the audio data output from the audio decoder 524 has been converted into an analog signal using the D/A converter 534, and supplied to the monitor 560. The monitor 560 outputs this audio signal from a built-in speaker.

The recording/playback unit 533 includes a hard disk as a storage medium in which video data, audio data, and so forth are recorded.

The recording/playback unit 533 encodes the audio data supplied from the audio decoder 524 by the encoder 551 using the MPEG format, for example. Also, the recording/playback unit 533 encodes the video data supplied from the video encoder 541 of the display converter 530 by the encoder 551 using the MPEG format. The recording/playback unit 533 synthesizes the encoded data of the audio data thereof, and the encoded data of the video data thereof using the multiplexer. The recording/playback unit 533 amplifies the synthesized data by channel coding, and writes the data thereof in the hard disk via a recording head.

The recording/playback unit 533 plays the data recorded in the hard disk via a playback head, amplifies, and separates into audio data and video data using the demultiplexer. The recording/playback unit 533 decodes the audio data and video data by the decoder 552 using the MPEG format. The recording/playback unit 533 converts the decoded audio data from digital to analog, and outputs to the speaker of the monitor 560. Also, the recording/playback unit 533 converts the decoded video data from digital to analog, and outputs to the display of the monitor 560.

The recorder control unit 526 reads out the latest EPG data from the EPG data memory 527 based on the user's instructions indicated by the infrared signal from the remote controller which is received via the reception unit 521, and supplies to the OSD control unit 531. The OSD control unit 531 generates image data corresponding to the input EPG data, and outputs to the display control unit 532. The display control unit 532 outputs the video data input from the OSD control unit 531 to the display of the monitor 560 for display. Thus, EPG (Electronic Program Guide) is displayed on the display of the monitor 560.

Also, the hard disk recorder 500 can obtain various types of data such as video data, audio data, EPG data, and so forth supplied from another device via the network such as the Internet or the like.

The communication unit 535 is controlled by the recorder control unit 526 to obtain encoded data such as video data, audio data, EPG data, and so forth transmitted from another device via the network, and to supply this to the recorder control unit 526. The recorder control unit 526 supplies the encoded data of the obtained video data and audio data to the recording/playback unit 533, and stores in the hard disk, for example. At this time, the recorder control unit 526 and recording/playback unit 533 may perform processing such as re-encoding or the like according to need.

Also, the recorder control unit 526 decodes the encoded data of the obtained video data and audio data, and supplies the obtained video data to the display converter 530. The display converter 530 processes, in the same way as the video data supplied from the video decoder 525, the video data supplied from the recorder control unit 526, supplies to the monitor 560 via the display control unit 532 for displaying an image thereof.

Alternatively, an arrangement may be made wherein in accordance with this image display, the recorder control unit 526 supplies the decoded audio data to the monitor 560 via the D/A converter 534, and outputs audio thereof from the speaker.

Further, the recorder control unit 526 decodes the encoded data of the obtained EPG data, and supplies the decoded EPG data to the EPG data memory 527.

The hard disk recorder 500 thus configured employs the image decoding device 101 as the video decoder 525, decoder 552, and a decoder housed in the recorder control unit 526. Accordingly, in the same way as with the image decoding device 101, of the filter coefficient values of the adaptive interpolation filter sent thereto, the video decoder 525, decoder 552, and decoder housed in the recorder control unit 526 set and use filter coefficient values corresponding to the block size (class). Accordingly, encoding efficiency can be improved.

Accordingly, the hard disk recorder 500 can realize high-speed processing. As a result thereof, the hard disk recorder 500 can obtain a decoded image, for example, from the encoded data of video data received via the tuner, the encoded data of video data read out from the hard disk of the recording/playback unit 533, or the encoded data of video data obtained via the network, and display on the monitor 560, at higher speeds.

Also, the hard disk recorder 500 employs the image encoding device 51 as the encoder 551. Accordingly, in the same way as with the encoder 551, the encoder 551 classifies into a class of large block seizes and a class of small block sizes in the slice, and calculates filter coefficient values for the adaptive interpolation filter for each classified class. Accordingly, motion prediction and compensation corresponding to local natures in the frame can be performed.

Accordingly, the hard disk recorder 500 can realize high-speed processing, and also improve the encoding efficiency of encoded data to be recorded in the hard disk, for example. As a result thereof, the hard disk recorder 500 can use the storage region of the hard disk more efficiently.

Note that description has been made so far regarding the hard disk recorder 500 for recording video data and audio data in the hard disk, but it goes without saying that any kind of recording medium may be employed. For example, even with a recorder to which a recording medium other than a hard disk, such as flash memory, optical disc, a video tape, or the like, is applied, in the same way as with the case of the above-described hard disk recorder 500, the image encoding device 51 and image decoding device 101 can be applied thereto.

[Configuration Example of Camera]

Fig. 33 is a block diagram illustrating a principal configuration example of a camera employing the image decoding device and image encoding device to which the present invention has been applied.

A camera 600 shown in Fig. 33 images a subject, displays an image of the subject on an LCD 616, and records this in a recording medium 633 as image data.

A lens block 611 inputs light (i.e., video of a subject) to a CCD/CMOS 612. The CCD/CMOS 612 is an image sensor employing a CCD or CMOS, converts the intensity of received light into an electrical signal, and supplies to a camera signal processing unit 613.

The camera signal processing unit 613 converts the electrical signal supplied from the CCD/CMOS 612 into color difference signals of Y, Cr, and Cb, and supplies to an image signal processing unit 614. The image signal processing unit 614 subjects, under the control of a controller 621, the image signal supplied from the camera signal processing unit 613 to predetermined image processing, or encodes the image signal thereof by an encoder 641 using the MPEG format for example. The image signal processing unit 614 supplies encoded data generated by encoding an image signal, to a decoder 615. Further, the image signal processing unit 614 obtains data for display generated at an on-screen display (OSD) 620, and supplies this to the decoder 615.

With the above-described processing, the camera signal processing unit 613 takes advantage of DRAM (Dynamic Random Access Memory) 618 connected via a bus 617 to hold image data, encoded data encoded from the image data thereof, and so forth in the DRAM 618 thereof according to need.

The decoder 615 decodes the encoded data supplied from the image signal processing unit 614, and supplies obtained image data (decoded image data) to the LCD 616. Also, the decoder 615 supplies the data for display supplied from the image signal processing unit 614 to the LCD 616. The LCD 616 synthesizes the image of the decoded image data, and the image of the data for display, supplied from the decoder 615 as appropriate, and displays a synthesized image thereof.

The on-screen display 620 outputs, under the control of the controller 621, data for display such as a menu screen or icon or the like made up of a symbol, characters, or a figure to the image signal processing unit 614 via the bus 617.

Based on a signal indicating the content commanded by the user using an operating unit 622, the controller 621 executes various types of processing, and also controls the image signal processing unit 614, DRAM 618, external interface 619, on-screen display 620, media drive 623, and so forth via the bus 617. A program, data, and so forth necessary for the controller 621 executing various types of processing are stored in FLASH ROM 624.

For example, the controller 621 can encode image data stored in the DRAM 618, or decode encoded data stored in the DRAM 618 instead of the image signal processing unit 614 and decoder 615. At this time, the controller 621 may perform encoding and decoding processing using the same format as the encoding and decoding format of the image signal processing unit 614 and decoder 615, or may perform encoding and decoding processing using a format that neither the image signal processing unit 614 nor the decoder 615 can handle.

Also, for example, in the event that start of image printing has been instructed from the operating unit 622, the controller 621 reads out image data from the DRAM 618, and supplies this to a printer 634 connected to the external interface 619 via the bus 617 for printing.

Further, for example, in the event that image recording has been instructed from the operating unit 622, the controller 621 reads out encoded data from the DRAM 618, and supplies this to a recording medium 633 mounted on the media drive 623 via the bus 617 for storing.

The recording medium 633 is an optional readable/writable removable medium, for example, such as a magnetic tape, a magneto-optical disk, an optical disc, semiconductor memory, or the like. It goes without saying that the recording medium 633 is also optional regarding the type of a removable medium, and accordingly may be a tape device, or may be a disc, or may be a memory card. It goes without saying that the recoding medium 633 may be a non-contact IC card or the like.

Alternatively, the media drive 623 and the recording medium 633 may be configured so as to be integrated into a non-transportable recording medium such as a built-in hard disk drive, SSD (Solid State Drive), or the like.

The external interface 619 is configured of, for example, a USB input/output terminal and so forth, and is connected to the printer 634 in the event of performing printing of images. Also, a drive 631 is connected to the external interface 619 according to need, on which the removable medium 632 such as a magnetic disk, optical disc, or magneto-optical disk or the like is mounted as appropriate, and a computer program read out therefrom is installed in the FLASH ROM 624 according to need.

Further, the external interface 619 includes a network interface to be connected to a predetermined network such as a LAN, the Internet, or the like. For example, in accordance with the instructions from the operating unit 622, the controller 621 can read out encoded data from the DRAM 618, and supply this from the external interface 619 to another device connected via the network. Also, the controller 621 can obtain, via the external interface 619, encoded data or image data supplied from another device via the network, and hold this in the DRAM 618, or supply this to the image signal processing unit 614.

The camera 600 thus configured employs the image decoding device 101 as the decoder 615. Accordingly, in the same way as with the image decoding device 101, of the filter coefficient values of the adaptive interpolation filter sent thereto, the decoder 615 sets and uses filter coefficient values corresponding to the block size (class).

Accordingly, the camera 600 can realize high-speed processing, and also generate a prediction image with high precision. As a result thereof, the camera 600 can obtain a decoded image with higher definition, for example, from the image data generated at the CCD/CMOS 612, the encoded data of video data read out from the DRAM 618 or recording medium 633, or the encoded data of video data obtained via the network, and display on the LCD 616.

Also, the camera 600 employs the image encoding device 51 as the encoder 641. Accordingly, in the same way as with the image decoding device 51, the encoder 641 classifies into a class of large block seizes and a class of small block sizes in the slice, and calculates filter coefficient values for the adaptive interpolation filter for each classified class. Accordingly, motion prediction and compensation corresponding to local natures in the frame can be performed.

Accordingly, the camera 600 can improve encoding efficiency of encoded data to be recorded in the hard disk, for example. As a result thereof, the camera 600 can use the storage region of the DRAM 618 or recording medium 633 in a more effective manner at higher speeds.

Note that the decoding method of the image decoding device 101 may be applied to the decoding processing that the controller 621 performs. Similarly, the encoding format of the image encoding device 51 may be applied to the encoding processing that the controller 621 performs.

Also, the image data that the camera 600 image may be a moving image, or may be a still image.

It goes without saying that the image encoding device 51 and image decoding device 101 may be applied to a device or system other than the above-described devices.

Reference Signs List

| | |
|---|---|
| 51 | image encoding device |
| 66 | lossless encoding unit |
| 74 | intra prediction unit |
| 75 | motion prediction/compensation unit |
| 76 | adaptive interpolation filter calculating unit |
| 77 | block determining unit |
| 81 | integer pixel precision motion prediction unit |
| 82 | decimal pixel precision motion prediction unit |
| 83 | mode determining unit |
| 84 | decimal pixel precision motion prediction unit |
| 85 | motion compensation unit |
| 91 | motion information buffer |
| 92 | large block filter calculating unit |
| 93 | small block filter calculating unit |
| 101 | image decoding device |
| 112 | lossless decoding unit |
| 121 | intra prediction unit |
| 122 | motion prediction/compensation unit |
| 123 | adaptive interpolation filter setting unit |
| 124 | block determining unit |
| 131 | mode/motion information buffer |
| 132 | motion compensation unit |
| 141 | large block adaptive filter coefficient buffer |
| 142 | small block adaptive filter coefficient buffer |

**Claims**

1.  An image processing device comprising:

    motion prediction means configured to perform motion prediction of a current block regarding which encoding processing is to be performed in candidate prediction modes, using a first filter coefficient that has been set beforehand;
    block determining means configured to classify into classes in accordance with block sizes indicated by an optimal prediction mode determined regarding said current block from said candidate prediction mode in which motion prediction has been performed by said motion prediction means; and
    filter coefficient calculating means configured to calculate a second filter coefficient which minimizes prediction error, for each of said classes classified by said block determining means.

2.  The image processing device according to Claim 1, wherein said motion prediction means perform motion prediction of said current block in said candidate prediction modes using said second filter coefficient calculated by said filter coefficient calculating means;
    said image processing device further comprising:

    mode determining means configured to determine, from said candidate prediction modes in which motion prediction has been performed by said motion prediction means using said second filter coefficient, said optimal prediction mode regarding said current block;

motion compensation means configured to perform motion compensation for said current block in said optimal prediction mode determined from said candidate prediction modes in which motion prediction has been performed by said motion prediction means; and

encoding means configured to encoding difference between a prediction image of said current block obtained by said motion compensation by said motion compensation means, and an original image.

3. The image processing device according to Claim 2, wherein said encoding means encode said second filter coefficient calculated for each of said classes by said filter coefficient calculating means.

4. The image processing device according to Claim 2, wherein said encoding means encode flag information indicating sending of said second filter coefficient for each of said classes, and said second filter coefficient of a class regarding which said flag information has been encoded.

5. The image processing device according to Claim 4, wherein, regarding a prediction mode for a block size classified into a class where said flag information is not encoded, said motion prediction means perform motion prediction of said current block using said first filter coefficient.

6. The image processing device according to Claim 4, wherein, regarding a prediction mode for a block size classified into a class where said flag information is not encoded, said motion prediction means perform motion prediction of said current block using said second filter coefficient of a class of a block size greater than that of that class.

7. The image processing device according to Claim 4, wherein, regarding a prediction mode for a block size classified into a class where said flag information is not encoded in a current slice, said motion prediction means perform motion prediction of said current block using said second filter coefficient of the same class in a slice prior to said current slice.

8. The image processing device according to Claim 1, wherein said block determining means classify into said classes depending on whether or not said block size is greater than an $8 \times 8$ block.

9. The image processing device according to Claim 1, wherein said block determining means classify into said classes depending on whether said block size is greater than a $16 \times 16$ block, or a $16 \times 16$ block or smaller but greater than an $8 \times 8$ block, or an $8 \times 8$ block or smaller.

10. An image processing method comprising the steps of:

an image processing device
performing motion prediction of a current block regarding which encoding processing is to be performed in candidate prediction modes, using a first filter coefficient that has been set beforehand,
classifying into classes in accordance with block sizes indicated by an optimal prediction mode determined regarding said current block from said candidate prediction mode in which motion prediction has been performed, and
calculating a second filter coefficient which minimizes prediction error, for each of said classes classified.

11. An image processing device comprising:

decoding means configured to decode motion vector information of a current block regarding which decoding processing is to be performed;
filter coefficient setting means configured to set, from filter coefficients calculated to minimize prediction error, for each of classes classified into classes in accordance with block sizes, a filter coefficient in accordance with the block size of said current block; and
prediction image generating means configured to generate a prediction image of said current block, using said motion vector information decoded by said decoding means and said filter coefficient set by said filter coefficient setting means.

12. The image processing device according to Claim 11, wherein said decoding means decode said filter coefficients for each class, encoded for each slice;
and wherein said filter coefficient setting means set, from said filter coefficients for each class that have been decoded by said decoding means, a filter coefficient in accordance with the block size of said current block.

13. The image processing device according to Claim 12, wherein said decoding means also decode prediction mode information of said current block;

and wherein said filter coefficient setting means set a filter coefficient in accordance with the block size of said current block, in accordance with a block size indicated by said prediction mode information decoded by said decoding means.

14. The image processing device according to Claim 12, wherein said decoding means decode flag information indicating sending of said filter coefficient of said each class encoded for each slice, and said filter coefficient of a class regarding which said flag information has been decoded.

15. The image processing device according to Claim 14, wherein, for a current block of a block size classified into a class regarding which said flag information is not decoded, said prediction image generating means generate a prediction image using a filter coefficient that has been set beforehand.

16. The image processing device according to Claim 14, wherein, for a current block of a block size classified into a class regarding which said flag information is not decoded, said prediction image generating means generate a prediction image using said filter coefficient of a class of a block size greater than that class.

17. The image processing device according to Claim 14, wherein, for a prediction mode of a block size classified into a class regarding which said flag information is not decoded in a current slice, said prediction image generating means generate a prediction image of said current block using said filter coefficient of the same class in a slice prior to said current slice.

18. The image processing device according to Claim 11, wherein classifying into said classes is performed depending on whether or not said block size is greater than an $8 \times 8$ block.

19. The image processing device according to Claim 11, wherein classifying into said classes is performed depending on whether said block size is greater than a $16 \times 16$ block, or a $16 \times 16$ block or smaller but greater than an $8 \times 8$ block, or an $8 \times 8$ block or smaller.

20. An image processing method comprising the steps of:

An image processing device
decoding motion vector information of a current block regarding which decoding processing is to be performed, setting, from filter coefficients calculated to minimize prediction error, for each of classes classified into classes in accordance with block sizes, a filter coefficient in accordance with the block size of said current block, and generating a prediction image of said current block, using said motion vector information that has been decoded and said filter coefficient that has been set.

## FIG. 1

| A | e1 | b | | A |
|---|---|---|---|---|
| | e2 | e3 | | |
| d | | c | | d |
| | | | | |
| A | | b | | A |

## FIG. 2

| A | | | | B | | | | C |
|---|---|---|---|---|---|---|---|---|
| | | | | | | | | |
| | | 1 | | 2 | | 3 | | |
| | | | | | | | | |
| D | | 4 | | E | | 5 | | F |
| | a | b | c | | | | | |
| | d | 6 | e | 7 | | 8 | | |
| | f | g | h | | | | | |
| G | | | | H | | | | I |

FIG. 3

COMPRESSED IMAGE

61 A/D CONVERSION UNIT

62 SCREEN REARRANGING BUFFER

63 ⊕

64 ORTHOGONAL TRANSFORM UNIT

65 QUANTIZATION UNIT

66 LOSSLESS ENCODING UNIT

67 STORAGE BUFFER

68 INVERSE QUANTIZATION UNIT

69 INVERSE ORTHOGONAL TRANSFORM UNIT

70 ⊕

71 DEBLOCKING FILTER

72 FRAME MEMORY

73

74 INTRA PREDICTION UNIT

75 MOTION PREDICTION/COMPENSATION UNIT

76 ADAPTIVE INTERPOLATION FILTER CALCULATING UNIT

77 BLOCK DETERMINING UNIT

78 PREDICTION IMAGE SELECTING UNIT

79 RATE CONTROL UNIT

51

FIG. 4

MACROBLOCK TYPE

16 × 16    16 × 8    8 × 16    8 × 8

SUB-MACROBLOCK TYPE

8 × 8    8 × 4    4 × 8    4 × 4

FIG. 5

# FIG. 6

# FIG. 7

# FIG. 8

START OF ENCODING
PROCESSING

PERFORM A/D CONVERSION — S11

PERFORM SORTING — S12

CALCULATE DIFFERENCE
BETWEEN IMAGE AND
PREDICTION IMAGE — S13

PERFORM ORTHOGONAL
TRANSFORM — S14

PERFORM QUANTIZATION — S15

PERFORM INVERSE
QUANTIZATION — S16

PERFORM INVERSE
ORTHOGONAL TRANSFORM — S17

ADD PREDICTION IMAGE — S18

PERFORM FILTERING — S19

STORE — S20

PREDICTION PROCESSING — S21

SELECT PREDICTION IMAGE — S22

PERFORM ENCODING — S23

STORE — S24

CONTROL RATE — S25

END

# FIG. 9

```
  ┌──────────────────────────────────────┐
  │    START PREDICTION PROCESSING       │
  └──────────────────────────────────────┘
                    │
                    ▼
  ┌──────────────────────────────────────┐
  │║    INTRA PREDICTION PROCESSING    ║│  S31
  └──────────────────────────────────────┘
                    │
                    ▼
  ┌──────────────────────────────────────┐
  │║ INTER MOTION PREDICTION PROCESSING ║│ S32
  └──────────────────────────────────────┘
                    │
                    ▼
            ┌────────────────┐
            │     RETURN     │
            └────────────────┘
```

# FIG. 10

```
┌─────────────────────────────────────────────┐
│     START INTRA PREDICTION PROCESSING        │
└─────────────────────────────────────────────┘
                      │
                      ▼
┌─────────────────────────────────────────────┐  S41
│    PERFORM INTRA PREDICTION AS TO THE        │
│  INTRA PREDICTION MODES OF 4 × 4 PIXELS,     │
│     8 × 8 PIXELS, AND 16 × 16 PIXELS         │
└─────────────────────────────────────────────┘
                      │
                      ▼
┌─────────────────────────────────────────────┐  S42
│       CALCULATE COST FUNCTION VALUE          │
│       AS TO THE INTRA PREDICTION MODES       │
└─────────────────────────────────────────────┘
                      │
                      ▼
┌─────────────────────────────────────────────┐  S43
│       DETERMINE OPTIMAL MODE AS TO           │
│       THE INTRA PREDICTION MODES             │
└─────────────────────────────────────────────┘
                      │
                      ▼
┌─────────────────────────────────────────────┐  S44
│  SELECT OPTIMAL INTRA PREDICTION MODE        │
│  OUT OF THE OPTIMAL MODES DETERMINED         │
│     AS TO THE INTRA PREDICTION MODES         │
└─────────────────────────────────────────────┘
                      │
                      ▼
            ┌───────────────────┐
            │      RETURN        │
            └───────────────────┘
```

# FIG. 11

START INTER MOTION PREDICTION PROCESSING

MOTION PREDICTION/COMPENSATION PROCESSING USING H.264/AVC FORMAT MOTION PREDICTION FILTER — S51

DETERMINE FIRST OPTIMAL INTER PREDICTION MODE — S52

CLASSIFY INTO CLASSES OF BLOCK SIZES GREATER THAN 8 × 8, AND BLOCK SIZES 8 × 8 AND SMALLER — S53

CALCULATE FILTER COEFFICIENT VALUES FOR ADAPTIVE INTERPOLATION FILTERS FOR THE CLASSES THAT HAVE BEEN CLASSIFIED — S54

MOTION PREDICTION/COMPENSATION PROCESSING USING ADAPTIVE INTERPOLATION FILTER — S55

DETERMINE SECOND OPTIMAL INTER PREDICTION MODE — S56

PERFORM FURTHER OPTIMIZATION? — S57

Yes

No

GENERATE PREDICTION IMAGE IN SECOND OPTIMAL INTER PREDICTION MODE — S58

RETURN

# FIG. 12

```
START MOTION PREDICTION/
COMPENSATION PROCESSING
```

DETERMINE MOTION VECTOR
AND REFERENCE IMAGE AS TO THE
INTER PREDICTION MODES OF
16 × 16 PIXELS THROUGH 4 × 4 PIXELS    S61

PERFORM COMPENSATION PROCESSING
AS TO REFERENCE IMAGE BASED ON
MOTION VECTOR REGARDING
THE INTER PREDICTION MODES    S62

GENERATE DIFFERENCE MOTION
VECTOR INFORMATION REGARDING
MOTION VECTOR DETERMINED AS
TO THE INTER PREDICTION MODES    S63

CALCULATE COST FUNCTION VALUE
AS TO THE INTER PREDICTION MODES    S64

RETURN

## FIG. 13

EP 2 472 871 A1

# FIG. 14

EP 2 472 871 A1

# FIG. 15

START DECODING PROCESSING

STORE IMAGE — S131

PERFORM DECODING — S132

PERFORM INVERSE QUANTIZATION — S133

PERFORM INVERSE ORTHOGONAL TRANSFORM — S134

ADD PREDICTION IMAGE — S135

PERFORM FILTERING — S136

STORE — S137

PREDICTION PROCESSING — S138

SELECT PREDICTION IMAGE — S139

PERFORM SORTING — S140

PERFORM D/A CONVERSION — S141

END

# FIG. 16

START PREDICTION PROCESSING

HAS INTRA ENCODING BEEN PERFORMED? — S171

No →

Yes

OBTAIN INTRA PREDICTION MODE INFORMATION — S172

OBTAIN FILTER COEFFICIENTS OF ADAPTIVE INTERPOLATION FILTER — S174

PERFORM INTRA PREDICTION — S173

OBTAIN PREDICTION MODE INFORMATION AND OTHERS — S175

SWITCH FILTER COEFFICIENTS IN ACCORDANCE WITH PREDICTION MODE INFORMATION — S176

PERFORM MOTION COMPENSATION — S177

RETURN

# FIG. 17

FIRST HIERARCHICAL LEVEL

32 × 32     32 × 16     16 × 32     16 × 16

SECOND HIERARCHICAL LEVEL

16 × 16     16 × 8     8 × 16     8 × 8

THIRD HIERARCHICAL LEVEL

8 × 8     8 × 4     4 × 8     4 × 4

EP 2 472 871 A1

# FIG. 18

EP 2 472 871 A1

## FIG. 19

300

336

337 LIGHT RECEPTION UNIT

351 REMOTE CONTROLLER

330 SDRAM

331 FLASH MEMORY

332 CPU

333 USB I/F

334 NETWORK I/F

335

314 AUDIO A/D CONVERSION CIRCUIT

322 AUDIO SIGNAL PROCESSING CIRCUIT

328 AUDIO CODEC

327 A/D CONVERSION CIRCUIT

326

329

323 ECHO CANCELLATION/ AUDIO SYNTHETIC CIRCUIT

324 AUDIO AMPLIFIER CIRCUIT

325

313 TERRESTRIAL TUNER

315 VIDEO DECODER

318 VIDEO SIGNAL PROCESSING CIRCUIT

319 GRAPHICS GENERATING CIRCUIT

320 PANEL DRIVING CIRCUIT

321 DISPLAY PANEL

316 DIGITAL TUNER

317 MPEG DECODER

EP 2 472 871 A1

## FIG. 20

POWER SUPPLY CIRCUIT UNIT ~451

TO EACH OF THE UNITS

460

LCD CONTROL UNIT ~455

LIQUID CRYSTAL DISPLAY ~418

MAIN CONTROL UNIT ~450

IMAGE DECODER ~456

OPERATION KEYS ~419

OPERATION INPUT CONTROL UNIT ~452

MULTIPLEXING/SEPARATING UNIT ~457

414

IMAGE ENCODER ~453

RECORDING/PLAYBACK UNIT ~462

STORAGE UNIT ~423

CCD CAMERA ~416

CAMERA I/F UNIT ~454

MODULATION/DEMODULATION CIRCUIT UNIT ~458

TRANSMISSION/RECEPTION CIRCUIT UNIT ~463

INFRARED COMMUNICATION UNIT ~481

AUDIO CODEC ~459

MICROPHONE ~421

400

SPEAKER ~417

EP 2 472 871 A1

## FIG. 21

EP 2 472 871 A1

53

# FIG. 22

EP 2 472 871 A1

**INTERNATIONAL SEARCH REPORT**

| International application No. |
| --- |
| PCT/JP2010/063919 |

**A. CLASSIFICATION OF SUBJECT MATTER**
*H04N7/32*(2006.01)i, *G06T7/20*(2006.01)i

According to International Patent Classification (IPC) or to both national classification and IPC

**B. FIELDS SEARCHED**

Minimum documentation searched (classification system followed by classification symbols)
H04N7/24-7/68, G06T7/20

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2005-532725 A (Nokia Corp.), 27 October 2005 (27.10.2005), entire text; all drawings & WO 2004/006558 A2 & CA 2491679 A & CN 1666429 A & ZA 200410403 A & HK 1081012 A | 1-20 |
| A | JP 2004-7337 A (Sony Corp.), 08 January 2004 (08.01.2004), entire text; all drawings & US 2004/0213470 A1 | 1-20 |
| A | WO 2008/010929 A2 (THOMSON LICENSING), 24 January 2008 (24.01.2008), entire text; all drawings & JP 2009-544222 A & CN 101491101 A & KR 10-2009-0039720 A | 1-20 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 October, 2010 (22.10.10) | 02 November, 2010 (02.11.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

<table>
<tr><td colspan="3"><strong>INTERNATIONAL SEARCH REPORT</strong></td><td>International application No.<br>PCT/JP2010/063919</td></tr>
</table>

| C (Continuation). | DOCUMENTS CONSIDERED TO BE RELEVANT | |
|---|---|---|
| Category* | Citation of document, with indication, where appropriate, of the relevant passages | Relevant to claim No. |
| A | WO 2008/075247 A1 (KONINKLIJKE PHILIPS ELECTRONICS N.V.),<br>26 June 2008 (26.06.2008),<br>entire text; all drawings<br>& CN 101563926 A    & KR 10-2009-0100402 A | 1-20 |

Form PCT/ISA/210 (continuation of second sheet) (July 2009)